# EUROPEAN PATENT SPECIFICATION

(11) **EP 2 660 693 B1**
(45) Date of publication and mention of the grant of the patent: **23.11.2016**
(21) Application number: 12166142.5
(22) Date of filing: 30.04.2012
(51) Int. Cl.: G06F 3/048

(54) **Touchscreen keyboard providing word predictions at locations in association with candidate letters**
Berührungsbildschirm-Tastatur mit Wortvorhersage an Standorten in Verbindung mit Kandidatenschreiben
Clavier à écran tactile fournissant des prédictions de mots à des emplacements en association avec des lettres candidates

(43) Date of publication of application: 06.11.2013
(73) Proprietor: BlackBerry Limited, Waterloo, ON N2K 0A7 (CA)
(72) Inventor: Griffin, Jason Tyler, Waterloo, Ontario N2L 3W8 (CA); Pasquero, Jerome, Waterloo, Ontario N2L 3W8 (CA); McKenzie, Donald Somerset, Waterloo, Ontario N2L 3W8 (CA)
(74) Representative: MERH-IP Matias Erny Reichl Hoffmann Patentanwälte PartG mbB

(56) References cited:
- WO-A1-2010/035574
- JP-A- 2011 197 782
- US-A1- 2009 077 464
- US-A1- 2011 078 563

## Description

### TECHNICAL FIELD

The present disclosure relates generally to input methodologies for electronic devices, such as handheld electronic devices, and more particularly, to methods for receiving predictive text input and generation of a set of characters for electronic devices.

### BACKGROUND

Increasingly, electronic devices, such as computers, netbooks, cellular phones, smart phones, personal digital assistants, tablets, etc., have touchscreens that allow a user to input characters into an application, such as a word processor or email application. Character input on touchscreens can be a cumbersome task due to, for example, the small touchscreen area, particularly where a user needs to input a long message.

WO 2010035574 (A1) discloses an input device enabling a user to input information through a virtual keyboard represented by an image display. The input device includes: a key specification means which specifies a key pressed on the virtual keyboard; a key prediction means which predicts a candidate key to be pressed next after the key specified by the key specification means; and a display processing means which modifies the display state of the candidate key. This facilitates key input using the virtual keyboard represented by the image display.

### BRIEF DESCRIPTION OF THE DRAWINGS

Fig. 1 is an example block diagram of an electronic device, consistent with embodiments disclosed herein.
Fig. 2 is a flowchart illustrating an example method for predicting a selected set of characters, consistent with embodiments disclosed herein.
Figs. 3A, 3B, 3C, and 3D show example front views of a touchscreen, consistent with embodiments disclosed herein.
Figs. 4A and 4B show example front views of a touchscreen, consistent with embodiments disclosed herein.
Fig. 5 shows an example front view of a touchscreen, consistent with embodiments disclosed herein.
Figs. 6A, 6B, and 6C show example front views of a touchscreen, consistent with embodiments disclosed herein.
Fig. 7 shows an example front view of a touchscreen, consistent with embodiments disclosed herein.
Figs. 8A and 8B show example front views of a touchscreen, consistent with embodiments disclosed herein.
Fig. 9 shows an example front view of a touchscreen, consistent with embodiments disclosed herein.
Figs. 10A and 10B show example front views of a touchscreen, consistent with embodiments disclosed herein.
Figs. 11A and 11B show example front views of a touchscreen, consistent with embodiments disclosed herein.
Figs. 12A and 12B show example front views of a touchscreen, consistent with embodiments disclosed herein.
Figs. 13A and 13B show example front views of a touchscreen, consistent with embodiments disclosed herein.
Figs. 14A, 14B, and 14C show example front views of a touchscreen, consistent with embodiments disclosed herein.
Fig. 15 shows an example front view of a touchscreen, consistent with embodiments disclosed herein.
Fig. 16 shows an example front view of a touchscreen, consistent with embodiments disclosed herein.
Fig. 17 is a flowchart illustrating an example method, consistent with embodiments disclosed herein.
Fig. 18 is a flowchart illustrating an example method, consistent with embodiments disclosed herein.
Fig. 19 is a flowchart illustrating an example method, consistent with embodiments disclosed herein.
Fig. 20 shows an example front view of a virtual keyboard for display on a touchscreen, consistent with embodiments disclosed herein.
Figs. 21 to 23 show example front views of a virtual keyboard for display on a touchscreen, consistent with embodiments disclosed herein.
Figs. 24 and 25 show flowchart illustrating example methods consistent with embodiments disclosed herein.
Fig. 26 shows an example front view of a virtual keyboard for display on a touchscreen, consistent with embodiments disclosed herein.

### DESCRIPTION OF EXAMPLE EMBODIMENTS

Reference will now be made in detail to various embodiments, examples of which are illustrated in the accompanying drawings. Wherever possible, the same reference numbers will be used throughout the drawings to refer to the same or like parts.

The present disclosure relates to an electronic device, including wired communication devices (for example, a laptop computer having a touchscreen) and mobile or handheld wireless communication devices such as cellular phones, smartphones, wireless organizers, personal digital assistants, wirelessly enabled notebook computers, tablets, and similar devices. The electronic device can also be an electronic device without wireless communication capabilities, such as a handheld electronic game device, digital photograph album, digital camera, or other device.

Basic predictive text input solutions have been introduced for assisting with input on an electronic device. These solutions include predicting which word a user is entering and offering multiple suggestions for completing the word. But these solutions can have limitations, often requiring the user to input most or all of the characters in a word before the solution suggests the word the user is trying to input. Even then, a user often has to divert focus from the keyboard to view and consider all of the suggested words displayed elsewhere on the display of the electronic device, and thereafter, look back at the keyboard to continue typing. Refocusing of one's eyes relative to the keyboard considering multiple suggested words while inputting information in an electronic device can be cumbersome, distracting, and otherwise inefficient. Moreover, processing cycles are lost and display power wasted as the processor is idling while the user is focusing attention to the input area, and then back at the virtual keyboard.

The efficiency of predictive text input solutions, from the perspective of both device resources and user experience, sometimes depends on the particular user and the nature of the interaction of the particular user with the touchscreen. Virtual keyboard usage patterns can be broadly categorized as being of two types: "rapid" and "precise". Rapid typists are typically fast two-thumb typists who rely on auto-correction. This usage pattern corresponds most closely with experienced, frequent touchscreen users. Precise typists are typically careful typists who are inclined to use a single finger point to tap keys in the virtual keyboard, and often choose predictions as an input accelerator rather than auto-correction. This usage pattern corresponds most closely with novice/new touchscreen users as well as potentially one-handed (thumb) use situations.

Accordingly, example embodiments described herein permit the user of an electronic device to input characters while reducing the need to consider multiple suggested words. The example embodiments seek to reduce or eliminate diversion of user attention from the keyboard and the subsequently refocusing of user attention. Example embodiments described herein also seek to accommodate different user types, such as rapid typists and precise typists, and the different efficiency challenges presented by the different user types.

Use of the indefinite article "a" or "an" in the specification and the claims is meant to include one or more than one of the feature that it introduces, unless otherwise indicated. Thus, the term "a set of characters" as used in "generating a set of characters" can include the generation of one or more than one set of characters. Similarly, use of the definite article "the", or "said," particularly after a feature has been introduced with the indefinite article, is meant to include one or more than one of the feature to which it refers (unless otherwise indicated). Therefore, the term "the generated set of characters" as used in "displaying the generated set of characters" includes displaying one or more generated set of characters. References to orientation contained herein, such as horizontal and vertical, are relative to the screen orientation of a graphical user interface rather than any physical orientation.

In accordance with the invention, there is provided a method for providing a virtual keyboard displayed on a display with visual cues, the virtual keyboard having a plurality of keys arranged in accordance with a keyboard layout, the method comprising the steps defined in claim 1.

In accordance with a further embodiment, there is provided an electronic device that comprises a display having a virtual keyboard displayed thereupon, and a processor. The processor can be configured to perform the methods described herein.

In a further embodiment, a non-transitory computer-readable storage medium is provided that includes computer executable instructions for performing methods described herein.

At least some of these example embodiments, as well as those described below, permit the user of an electronic device to input a set of characters without diverting attention from the virtual keyboard and subsequently refocusing. Predicting and providing various options that the user is likely contemplating, and doing so at appropriate locations near the keyboard, allows the focus to remain near the keyboard, which enhances efficiency, accuracy, and speed of character input.

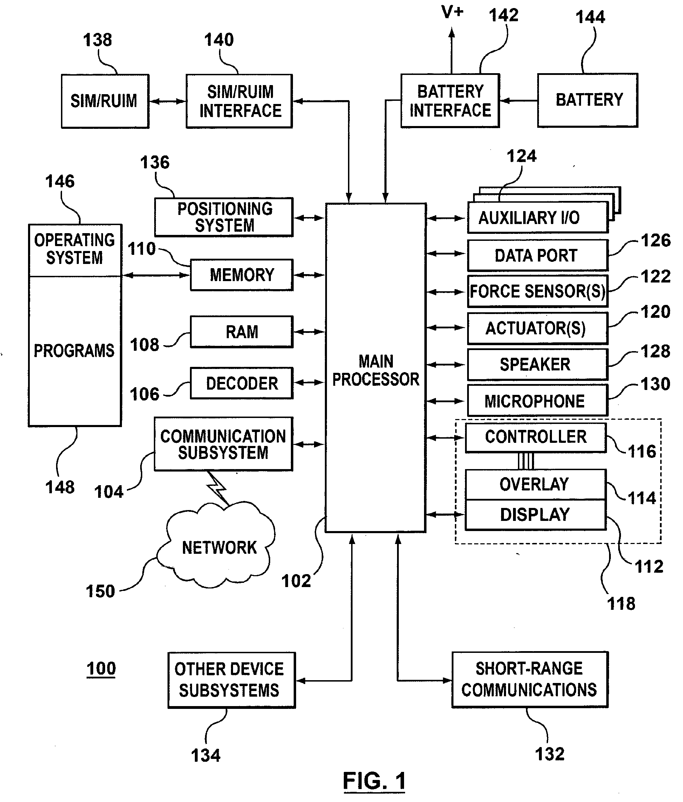

Fig. 1 is a block diagram of an electronic device 100, consistent with example embodiments disclosed herein. Electronic device 100 includes multiple components, such as a main processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144.

Main processor 102 is coupled to and can interact with additional subsystems such as a Random Access Memory (RAM) 108; a memory 110, such as a hard drive, CD, DVD, flash memory, or a similar storage device; one or more actuators 120; one or more force sensors 122; an auxiliary input/output (I/O) subsystem 124; a data port 126; a speaker 128; a microphone 130; short-range communications 132; other device subsystems 134; and a touchscreen 118.

Touchscreen 118 includes a display 112 with a touch-active overlay 114 connected to a controller 116. User-interaction with a graphical user interface (GUI), such as a virtual keyboard rendered and displayed on the display 112 as a GUI for input of characters, or a web-browser, is performed through touch-active overlay 114. Main processor 102 interacts with touch-active overlay 114 via controller 116. Characters, such as text, symbols, images, and other items are displayed on display 112 of touchscreen 118 via main processor 102. Characters are inputted when the user touches the touchscreen at a location associated with said character.

Touchscreen 118 is connected to and controlled by main processor 102. Accordingly, detection of a touch event and/or determining the location of the touch event can be performed by main processor 102 of electronic device 100. A touch event includes in some embodiments, a tap by a finger, a swipe by a finger, a swipe by a stylus, a long press by finger or stylus, or a press by a finger for a predetermined period of time, and the like.

While specific embodiments of a touchscreen have been described, any suitable type of touchscreen for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the electronic device and its particular application and demands.

Main processor 102 can also interact with a positioning system 136 for determining the location of electronic device 100. The location can be determined in any number of ways, such as by a computer, by a Global Positioning System (GPS), either included or not included in electric device 100, through a Wi-Fi network, or by having a location entered manually. The location can also be determined based on calendar entries.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by main processor 102 and are typically stored in memory 110. Additional applications may be loaded onto electronic device 100 through network 150, auxiliary I/O subsystem 124, data port 126, short-range communications subsystem 132, or any other suitable subsystem.

A received signal such as a text message, an e-mail message, or web page download is processed by communication subsystem 104 and this processed information is then provided to main processor 102. Main processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

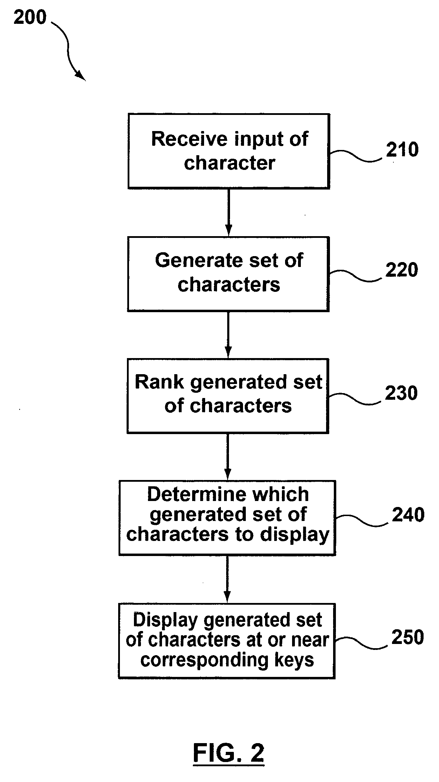

Fig. 2 is a flowchart illustrating an example method 200 for predicting a set of characters, consistent with example embodiments disclosed herein. As used herein, a predictor (such as a predictive algorithm, program or firmware) includes a set of instructions that when executed by a processor (for example, main processor 102), can be used to disambiguate for example, received ambiguous text input and provide various options, such as a set of characters (for example, words or phrases, acronyms, names, slang, colloquialisms, abbreviations, or any combination thereof) that a user might be contemplating. A predictor can also receive otherwise unambiguous text input and predict a set of characters potentially contemplated by the user based on several factors, such as context, frequency of use, and others as appreciated by those skilled in the field. The predictor may predict a set of characters which completes a received text input (known as auto-completion), correct received text input (known as auto-correction), or a combination thereof (e.g., completing the text input while correcting previously entered text input).

For example, in the predictor is a program 148 residing in memory 110 of electronic device 100. Accordingly, method 200 includes a predictor for generating a set of characters corresponding to a subsequent candidate input character based on inputted characters. It can be appreciated that while the example embodiments described herein are directed to a predictor program executed by a processor, the predictor can be executed by a virtual keyboard controller.

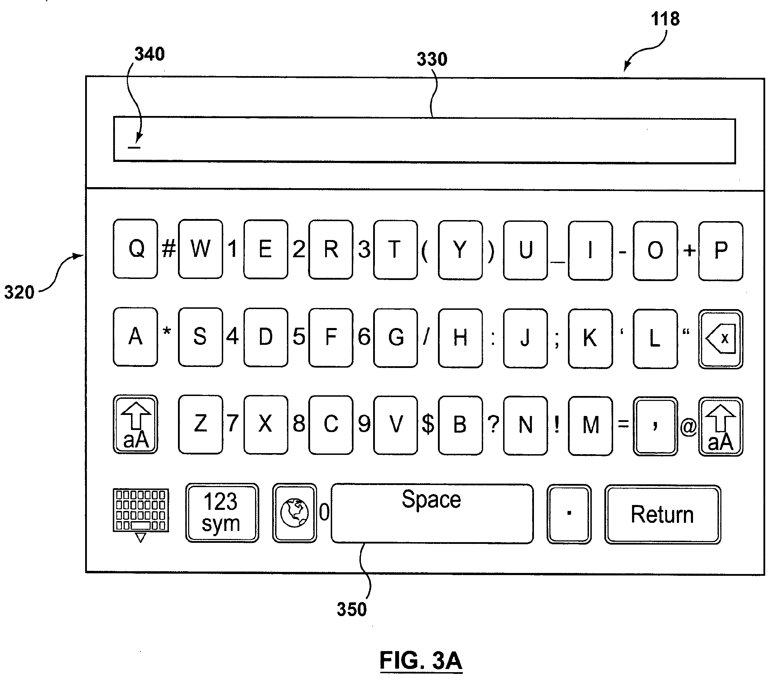

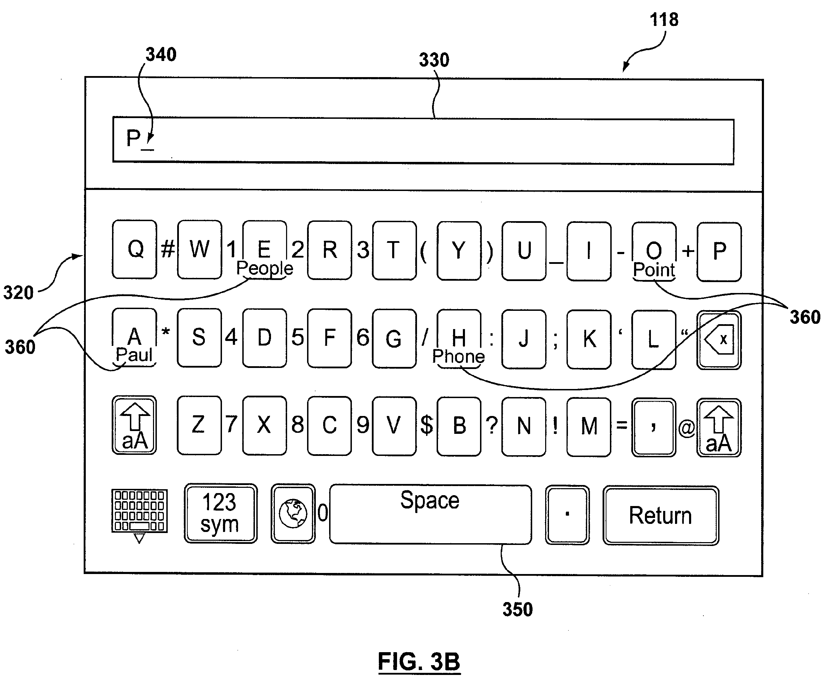

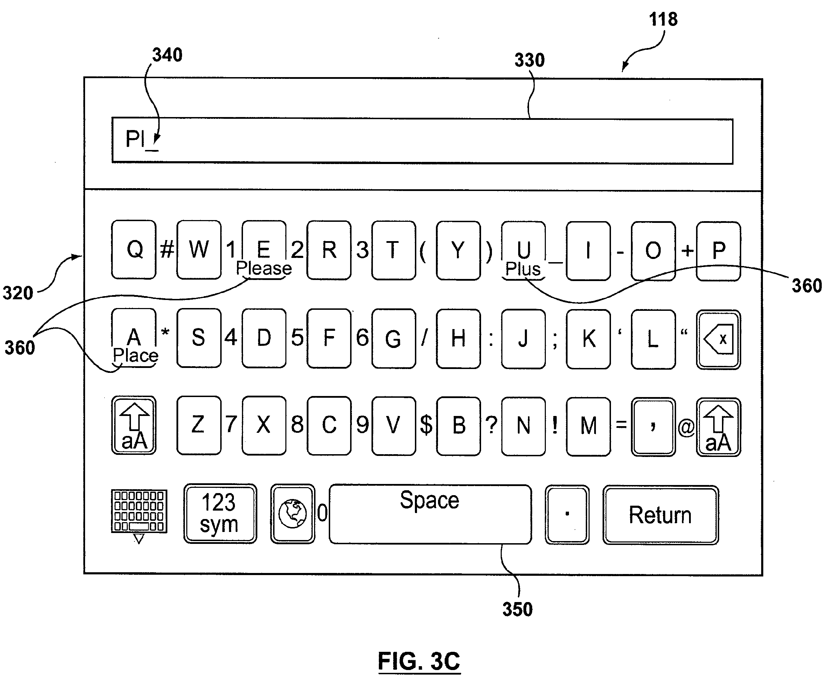

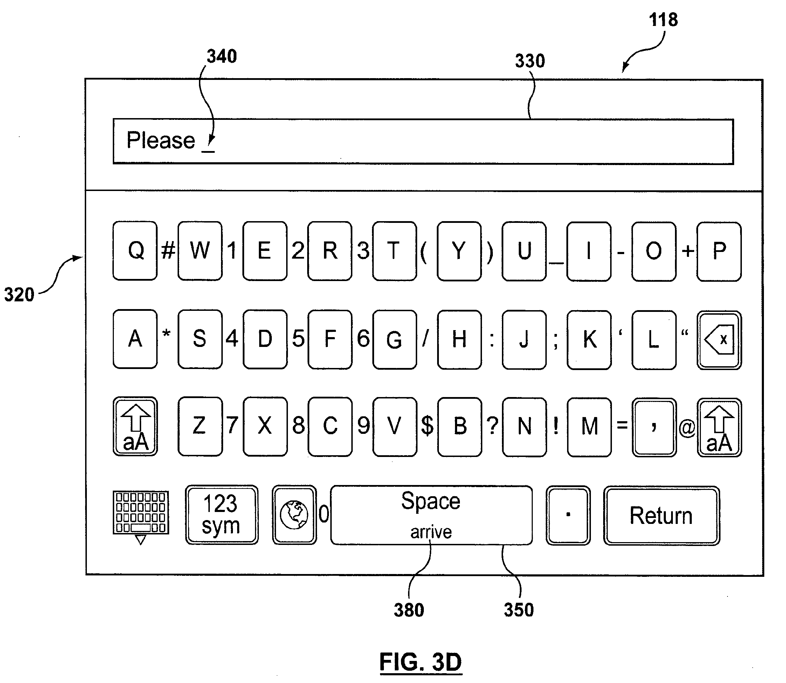

Method 200 begins at block 210, where the processor receives an input of one or more characters from a virtual keyboard displayed on a touchscreen. As used herein, however, a character can be any alphanumeric character, such as a letter, a number, a symbol, a punctuation mark, and the like. The inputted character can be displayed in an input field (for example, input field 330 further described below in Figs. 3-9) that displays the character the user inputs using the virtual keyboard.

At block 220, the processor generates one or more sets of characters such as words or phrases, acronyms, names, slang, colloquialisms, abbreviations, or any combination thereof based on the input received in block 210. The set of characters includes, for example, a set of characters that are stored in a dictionary (for example, a word or an acronym) of a memory of the electronic device, a set of characters that were previously inputted by user (for example, a name or acronym), a set of characters based on a hierarchy or tree structure, a combination thereof, or any set of characters that are selected by a processor based on defined arrangement.

In some embodiments, the processor can use contextual data for generating a set of characters. Contextual data considers the context of characters in the input field. Contextual data can include information about, for example, set of characters previously inputted by the user, grammatical attributes of the characters inputted in the input field (for example, whether a noun or a verb is needed as the next set of characters in a sentence), or any combination thereof. For example, if the set of characters "the" has already been inputted into display, the processor can use the contextual data to determine that a noun-instead of a verb-will be the next set of characters after "the". Likewise, if the set of characters "Guy Lafleur played in the National Hockey" was inputted, based on the context, the processor can determine the subsequent set of characters is likely "League". Using the contextual data, the processor can also determine whether an inputted character was incorrect. For example, the processor can determine that the inputted character was supposed to be a "w" instead of an "a", given the proximity of these characters on a QWERTY virtual keyboard.

Processor 102 can also include an affix as part of the set of characters, such as an adverb ending, an adjective ending, different verb tenses, and the like, or any other change to make a complete set of characters. Processor 102 can also use the received input to generate affixes, such as plural endings or plural forms. Any known predictive technique or software can be used to process the received input and the contextual data in generating set of characters at block 220.

In some example embodiments, the set of characters generated at block 220 can begin with the same character received as input at block 210. For example, if the characters "pl" have been received as input using a virtual keyboard, these characters will be received by the processor as the input. In these embodiments, the set of characters generated at block 220 would all begin with "pl", such as "please" or "plot." There is no limit on the length of a generated set of characters. Regarding affixes, if the user has input the characters "child", for example, the affixes generated at block 220 could include "-ren", to make the set of characters "children", or "-ish", to make the set of characters "childish".

In some example embodiments, the set of characters generated at block 220 can simply include the same characters received as input at block 210. For example, if the received input is an "x," the processor may generate "example" or "xylophone" as the set of characters. Such sets of characters can be generated using the contextual data.

In another example embodiment, if input has not been received or a delimiter (such as a <SPACE>) has been used, the generated set of characters can be placed on subsequent candidate input characters that correspond to the first letter of the generated set of characters.

Next, at block 230, the generated set of characters from block 220 can be ranked. The rankings reflect the likelihood that a candidate set of characters might have been intended by the user, or might be chosen by a user compared to another candidate set of characters.

In some embodiments, contextual data can be included in the ranking at block 230. In some embodiments, the electronic device can be configured to rank nouns or adjectives higher based on the previous inputted set of characters. If the inputted set of characters is suggestive of a noun or adjective, the processor, using the contextual data, can rank the nouns or adjectives corresponding to what the user is typing higher at block 230. In an additional embodiment, set of characters including adjective affixes (such as "-ish" or "-ful"), phrases, plurals, or combinations thereof can also be ranked. Contextual data can increase the likelihood that the higher ranked generated set of characters is intended by a user. In some embodiments, contextual data can include information about which programs or applications are currently running or being used by a user. For example, if the user is running an email application, then set of characters associated with that user's email system, such as set of characters from the user's contact list, can be used to determine the ranking. N-grams, including unigrams, bigrams, trigrams, and the like, can be also used in the ranking of the sets of characters. Alternatively, the geolocation of the electronic device or user can be used in the ranking process. If, for example, the electronic device recognizes that a user is located at his/her office, then sets of characters generally associated with work can be ranked higher in the list. If, on the other hand, the device determines a user is at the beach, then sets of characters generally associated with the beach can be ranked higher in the list.

At block 240, the processor determines which of the set of characters to display based on the ranking. For example, higher ranked sets of characters are more likely to be determined that they should be displayed. A ranker (such as a ranking algorithm, program or firmware) includes a set of instructions that when executed by a processor (for example, main processor 102), can be executed to determine ranking in this regard. In some embodiments, the ranker is a program 146 residing in memory 110 of electronic device 100.

At block 250, the determined set of characters is displayed at a location on the keyboard corresponding to a subsequent candidate input character, predicted as the next character in a word that the user might input. For instance, if a user inputs "pl", the word "please" would be displayed on the key for the letter "e"-the subsequent candidate input character for that word. Similarly, the word "plus" would also be displayed on the key for the letter "u"-another subsequent candidate input character. The subsequent candidate input character can be any alphanumeric character, such as a letter, number, symbol, punctuation mark, and the like.

In some embodiments, the generated set of characters is displayed at or near keys on the virtual keyboard associated with the subsequent candidate input characters. Its placement at or near a key can depend, for instance, on the size of the word or the number of nearby subsequent candidate input characters and the size of their associated set of characters.

The set of characters can be displayed in a manner that will attract the user's attention. In some embodiments, a displayed set of character's appearance can be enhanced or changed in a way that makes the set more readily visible to the user. For example, displayed sets of characters can be displayed with backlighting, highlighting, underlining, bolding, italicizing, using combinations thereof, or in any other way for making the displayed set of characters more visible.

When identifying the set of characters for display at block 240, the processor can limit the displayed set of characters to the top few or choose among the higher ranked sets of characters. For example, if two sets of characters are both ranked high, and these sets of characters would otherwise be displayed at the same key, the electronic device could be configured to display only the highest ranked generated set of characters. In other embodiments, both sets of characters could be displayed at or around the same key, or one set of characters is displayed at one key while the second set of characters is displayed at another key. In some example embodiments, the processor can take into account the display size to limit the number of generated sets of characters.

In some embodiments, the ranking could be used to choose between two or more sets of characters that, when displayed on adjacent subsequent candidate input characters, would overlap with each other (e.g., because of their respective lengths). In such a scenario, the electronic device could be configured to display the higher ranked set of characters on the keyboard. For example, if the set of characters "establishment" is ranked first in a list generated at block 240 after the letter "E" is inputted, "establishment" could be displayed at the "S" key. When displayed on a virtual keyboard, however, its length might occupy some space on the "A" key and the "D" key, potentially blocking a set of characters that would be displayed on or around those keys. At block 240, it could be determined that "establishment" would be displayed fully, and no other set of characters would be placed at the "A" or "D" keys ahead of the first ranked set of characters "establishment." An alternative to displaying only the top ranked set of characters would be to use abbreviations or recognized shortened forms of the set of characters, effectively permitting a long set of characters to be displayed within or mostly within the boundaries of a single key simultaneously with other sets of characters on adjacent keys of a virtual keyboard.

Figures 3-9 illustrate a series of example front views of the touchscreen 118 having a virtual keyboard 320, consistent with example embodiments disclosed herein. Starting with Fig. 3A, touchscreen 118 includes a virtual keyboard 320 that is touch-active. The position of the virtual keyboard 320 is variable such that virtual keyboard 320 can be placed at any location on touchscreen 118. Touchscreen 118 could be configured to detect the location and possibly pressure of one or more objects at the same time. Touchscreen 118 includes two areas: (1) an input field 330 that displays characters after a user has inputted those characters and (2) the virtual keyboard 320 that receives the input from the user. As described throughout this disclosure, a virtual keyboard displays a set of characters at a location on the keyboard corresponding to a subsequent candidate input character that might be received as input from the user.

The examples and embodiments illustrated in Figures 3-9 can be implemented with any set of characters, such as words, phrases, acronyms, names, slang, colloquialisms, abbreviations, or any combination thereof.

As shown in Fig. 3A, touchscreen 118 displays a standard QWERTY virtual keyboard 320; however, any conventional key configuration can be displayed for use in the device, such as AZERTY, QWERTZ, or a layout based on the International Telecommunication Union (ITU) standard (ITU E.161) having "ABC" on key 2, "DEF" on key 3, and so on. Virtual keyboard 320 includes space key 350 as well as other keys that can provide different inputs, such as punctuation, letters, numbers, enter or return keys, and function keys. While virtual keyboard 320 is shown as having a square shape, it can have any other shape (such as an arch).

As shown in Fig. 3A, touchscreen 118 displays input field 330, which displays the characters the user inputs using virtual keyboard 320. Input field 330 includes a cursor 340, which can be an underscore (as shown) or any other shape, such as a vertical line. Cursor 340 represents the character space where a next inputted character, selected character, or selected set of characters will be inserted.

As shown in Fig. 3B, when a user inputs a character (in this example, "P"), this character is displayed in input field 330 and cursor 340 moves to the character space where the next inputted character or word will be inserted. After the character is inputted, a predictor (such as, a predictive algorithm or a circuit) can generate set of characters 360 (for this embodiment) that all begin with the character "P", or characters if more than one character is input. The generated set of characters are displayed at a location on the keyboard corresponding to a subsequent candidate input character that might be received as input from the user. As mentioned, generated set of characters 360 can be displayed at or near the key corresponding to the subsequent candidate input characters (for example, under the respective A, E, H, and O keys of the virtual keyboard 320). Indeed, slightly shifting the display location of the generated set of characters can address overcrowding of subsequent candidate input characters, effectively permitting more set of characters to be displayed.

In the example shown in Fig. 3B, "P" is received as input and a predictor generates several set of characters 360, which are displayed at keys corresponding to each generated set of characters' subsequent candidate input character. As shown in Fig. 3B, "People" is placed at the "E" key because the next letter after "P" of "People" is "E"; "Paul" will be place at the "A" key because the next letter after "P" of "Paul" is "A"; "Phone" will be placed at the "H" key because the next letter after "P" of "Phone" is "H"; and so on. It should be noted that any of the letters in the set of characters can be upper case or lower case.

In the embodiment shown in Fig. 3C, "L" is next input received by touchscreen, and a predictor determines several generated set of characters 360, which are displayed at a key corresponding to subsequent candidate input characters (for example, under the respective A, E, and U keys of the virtual keyboard 320), for the current position of cursor 340, which is in the third character position, as shown in input field 330. In another embodiment, a generated set of characters 360 can be presented such as to include the subsequent candidate input character. For example, the set of characters "Please" can be displayed so that the characters "Pl" are displayed before the "E" character on the "E" key, and the characters "ase" can be placed after the "E" character on the "E" key. Further, in this or other embodiments, the displayed "E" can be presented in a manner that differs from the "Pl" and "ase", thereby enabling the user to still recognize it as the "E" key while also making it readily visible so that the user can either input the generated set of characters "Please" or input the character "E". The "E" can be capitalized or in lowercase. In other embodiments, an affix can be displayed at the key. Using the example of the set of characters "Please" above, the "ase" could be displayed at the "E" key so the set of characters fragment "-ease" or "-Ease" would appear.

If the user inputs a generated set of characters, that set of characters is placed in input field 330. This can be seen in Fig. 3D, where the user has inputted generated set of characters "Please," resulting in its placement in the input field. A space is inserted after the set of characters if the user wants to input a new set of characters. A user could input a generated set of characters in various ways, including in a way that differs from a manner of inputting a character key. For example, to input a generated set of characters, a user could use a finger or stylus to swipe the generated set of characters. As used herein, swiping includes swiping the set of characters itself or swiping or touching near the set of characters. For the latter embodiment, the device can detect a swipe or touch near a set of characters, be it a generated set of characters or a predicted set of characters (to be described below), and through the use of a predictor, determine the set of characters the user intended to input. In another embodiment, the user could press a key for a predetermined period of time, such as a long press. That key can be, for example, the key corresponding to the subsequent candidate input character of the set of characters. So, if the set of characters "Please" is intended to be inputted instead of "E", the electronic device 100 can be configured to require that the "E" key be pressed for a predetermined period of time to trigger the input of "Please".

After a generated set of characters 360 has been determined, as shown in Fig. 3D, a predicted set of characters 380 can be displayed, shown here at space key 350. Predicted set of characters 380 can differ from generated set of characters 360 (as shown in Figs. 3A-3C) and is the system's attempt to predict the next set of characters a user might be contemplating. A predictor is used to determine predicted set of characters 380. As with displayed generated set of characters 360, predicted set of characters 380 can be received as input in any number of ways, including receiving a swiping of the predicted set of characters with a finger or stylus or receiving a pressing of a key (such as the space key or another designated key) for a predetermined period of time (long press).

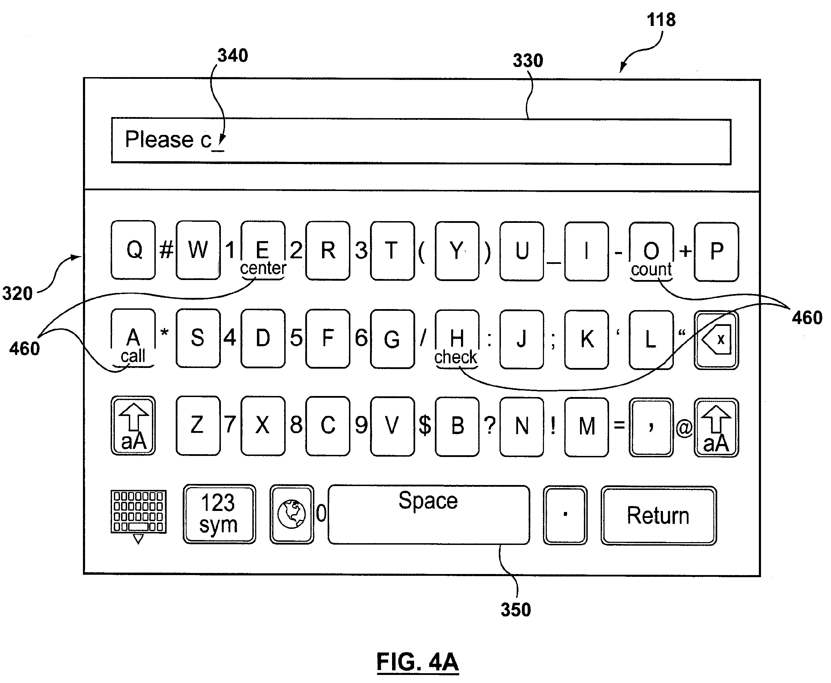

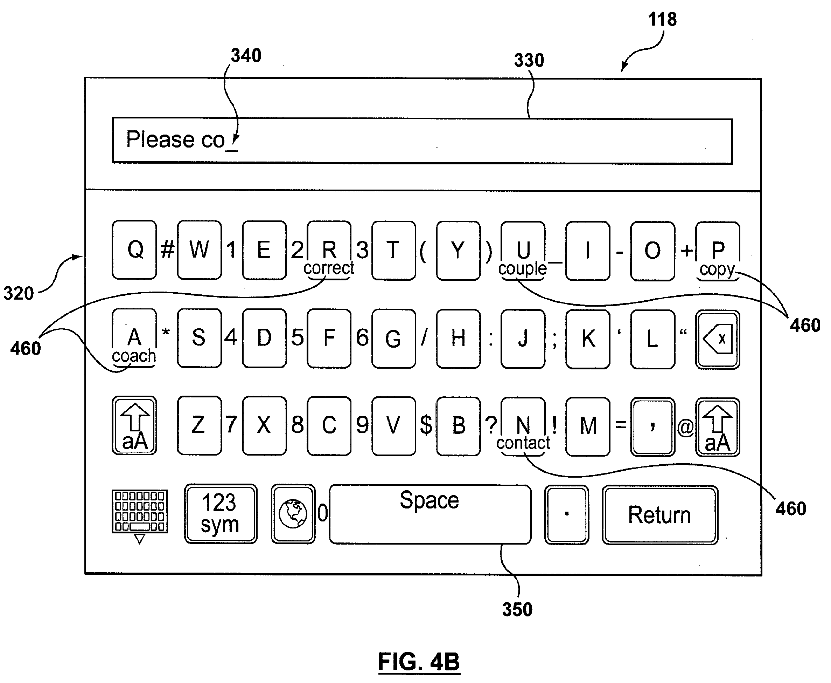

In Fig. 4A, electronic device 100 receives "C" as input from virtual keyboard 320. Again, a predictor determines generated set of characters 460 based in part on the received input. In Fig. 4B, electronic device 100 receives "O" as input from the virtual keyboard and outputs the "O" in input field 330. As shown in Fig. 4A, the set of characters "count" was displayed at the "O" key after the input of the "C" character was received. Since the "O" key was pressed in a manner to only input the "O" character, as shown in Fig. 4B, an "O" is displayed as second character of the currently inputted set of characters, and the set of characters "count" is not inputted by the user. Alternatively, if a user wanted to input the generated set of characters "count," the user can input the "O" key in Fig. 4A in a manner different from a manner of inputting the "O" key, such as by swiping the set of characters "count" or by a long press on the "O" key, as opposed to tapping. Returning to Fig. 4B, after the "O" is inputted, generated set of characters 460 are displayed at the keys corresponding to subsequent candidate input characters, as shown in Fig. 4B.

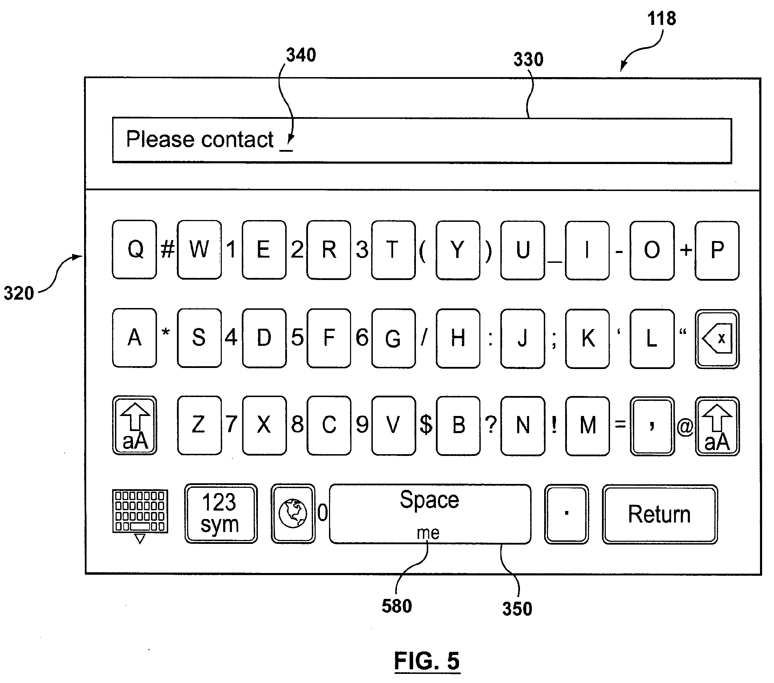

Fig. 5 shows input field 330 displaying the set of characters "contact" followed by a space. In that instance, the user inputted the generated set of characters "contact" 460 as was shown in Fig. 4B at the "N" key. Referring back to Fig. 5, a <SPACE> character is now automatically inserted after the generated word in the input field. Predicted word "me" 580 is now displayed on space key 350.

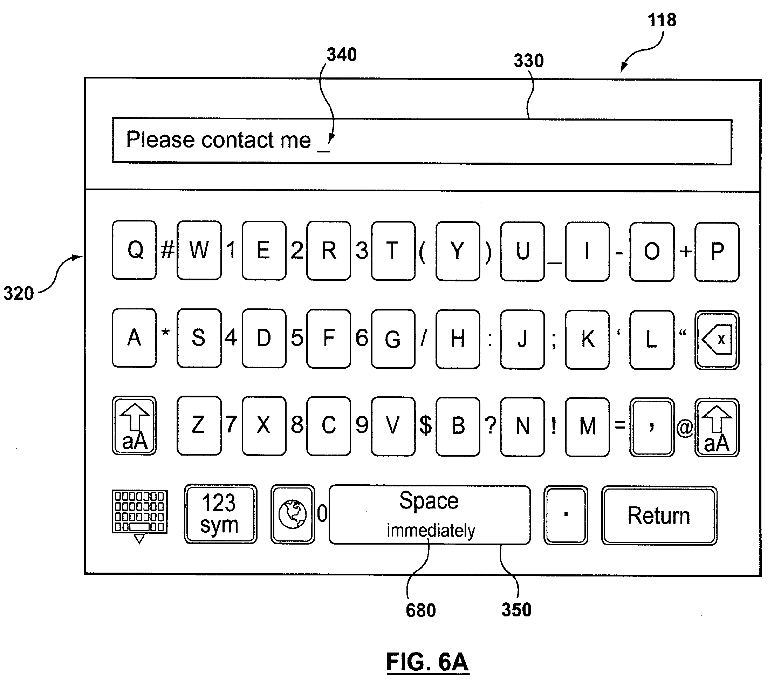

If the predicted word "me" 580 is received as input, the word "me" 580 is then displayed in input field 330 followed by a space as shown in Fig. 6A, which then shows predicted word 680 "immediately" displayed on space key 350. The predicted word is presented after a completed word and space have been displayed in input field 330.

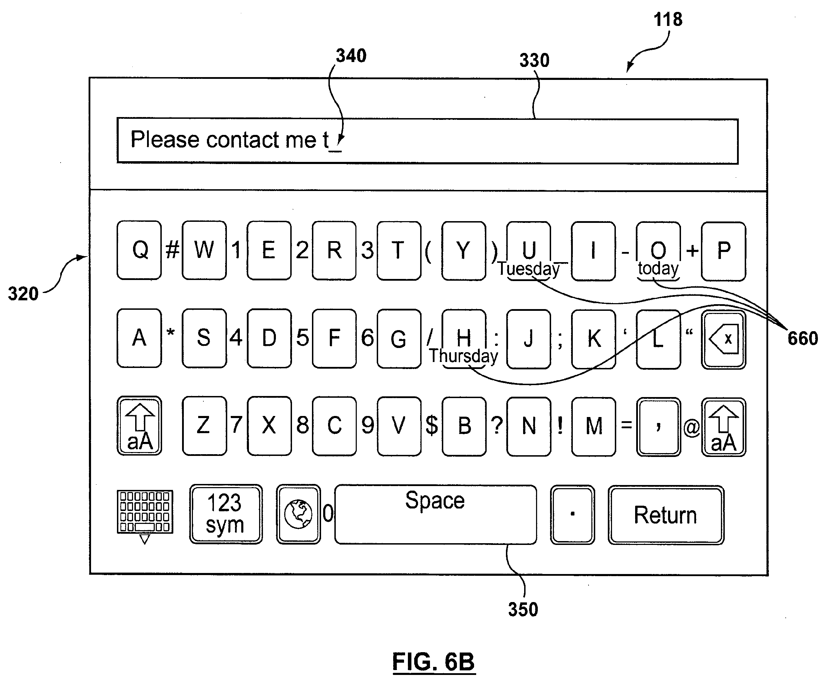

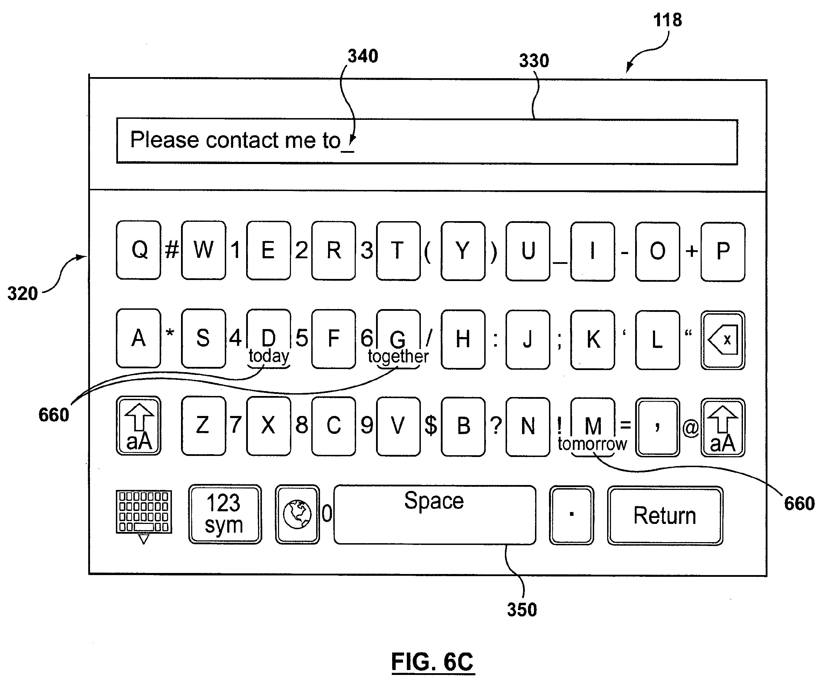

Fig. 6B shows an example where touchscreen 118 has received the "T" character as input after the user has pressed the "T" key. In this scenario, touchscreen 118 displays a "t" in input field 330. Generated set of characters 660 (for example, "Tuesday," "today," and "Thursday") are displayed at the keys of the subsequent candidate input characters. Fig. 6C shows an example where electronic device 100 has received the "o" character as input after the user presses the "O" key instead of inputting generated set of characters 660 "today" as was shown in Fig. 6B. Thus, "o" is now displayed in input field 330.

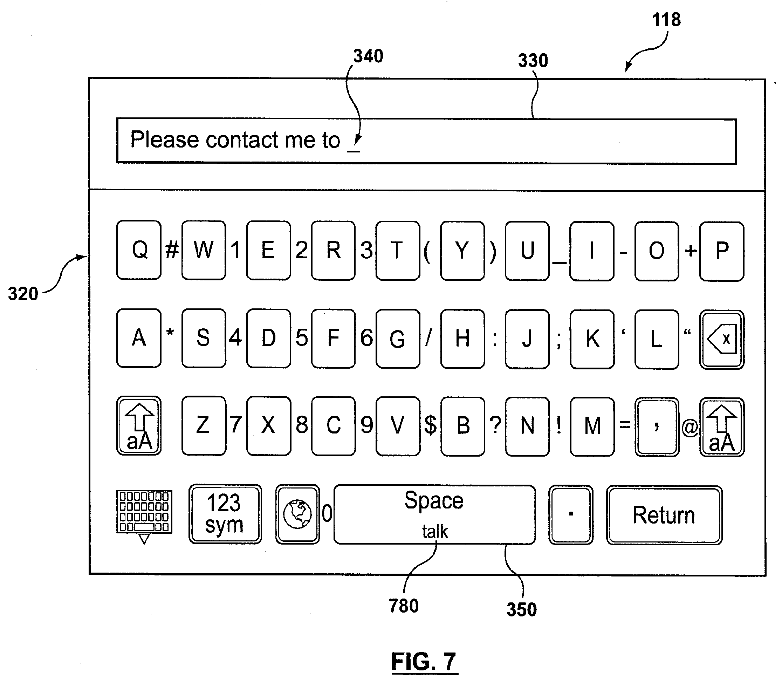

Fig. 7 shows an example where touchscreen 118 has received the <SPACE> character as input after the user selects the space key. In this scenario, touchscreen 118 inserts a <SPACE> character, and then displays predicted set of characters "talk" 780 at space key 350.

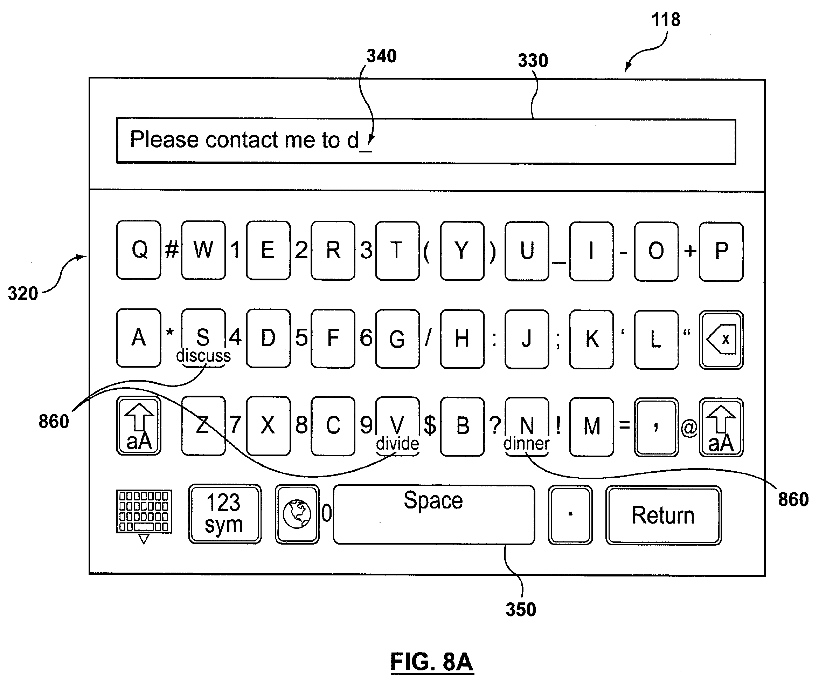

Fig. 8A shows an example where touchscreen 118 has received the "d" character as input after the user presses the "D" key. In this scenario, touchscreen 118 displays a "d" in the input field 330 and displays generated set of characters "discuss," "divide," and "dinner" 860 on keys corresponding to subsequent candidate input characters. In this example embodiment, while the character "I" was never received as input, electronic device 100 determined that generated set of characters "discuss," "divide," and "dinner" 860 were the set of characters to be displayed on touchscreen. In this embodiment, because each of these set of characters has "i" as its second letter, touchscreen 118 displayed generated set of characters using a further subsequent letter in the set of characters (for example, "discuss" under the "S" key, "divide" under the "V" key, and "dinner" under the "N" key). In other embodiments, generated set of characters "discuss," "divide," and "dinner" 860 can be displayed at or near the "I" key.

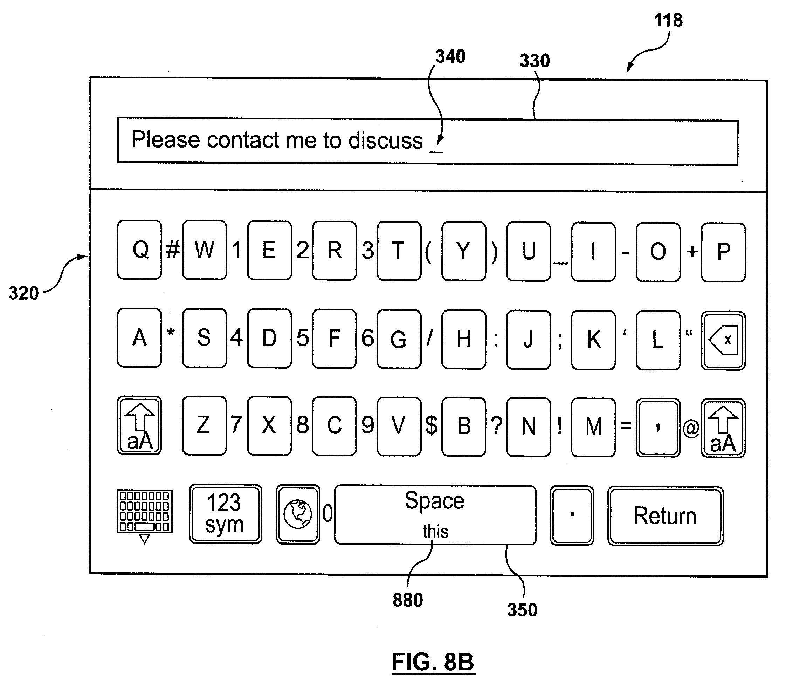

Fig. 8B shows an example where touchscreen 118 has received the set of characters "discuss" as input after the user chooses generated set of characters "discuss" 860. In this example, touchscreen 118 displays predicted set of characters "this" 880 at space key 350.

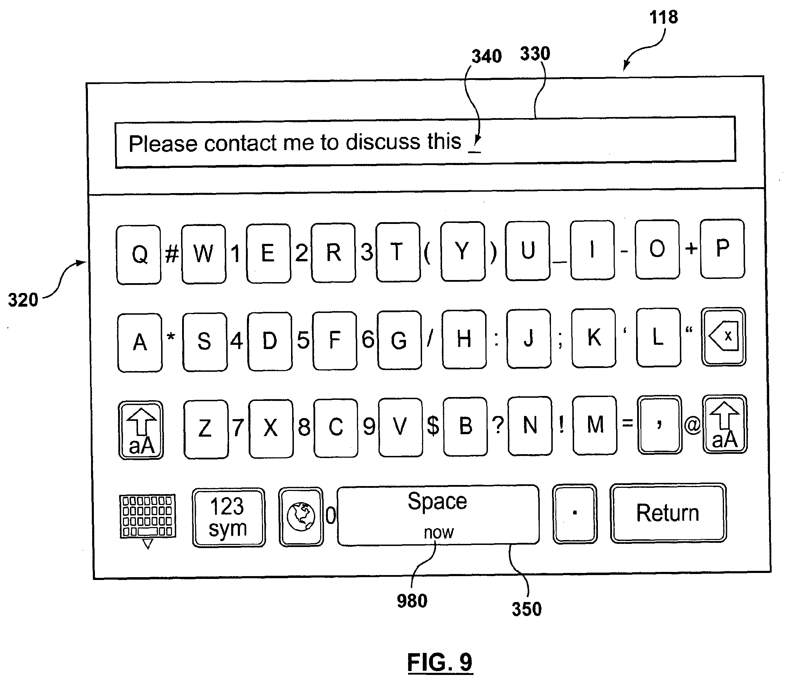

Fig. 9 shows an example where touchscreen 118 receives the "this" set of characters as input after user selects "this" as a desired predicted set of characters 880. In this example, touchscreen 118 displays predicted set of characters "now" 980 at space key 350.

Touchscreen 118 can also receive punctuation as input at any time during the typing of a message. If a user decides to use punctuation after inputting either a generated set of characters or a predicted set of characters, the <SPACE> character (for example, the <SPACE> character prior to cursor 940 of Fig. 9) is deleted and the inputted punctuation is inserted.

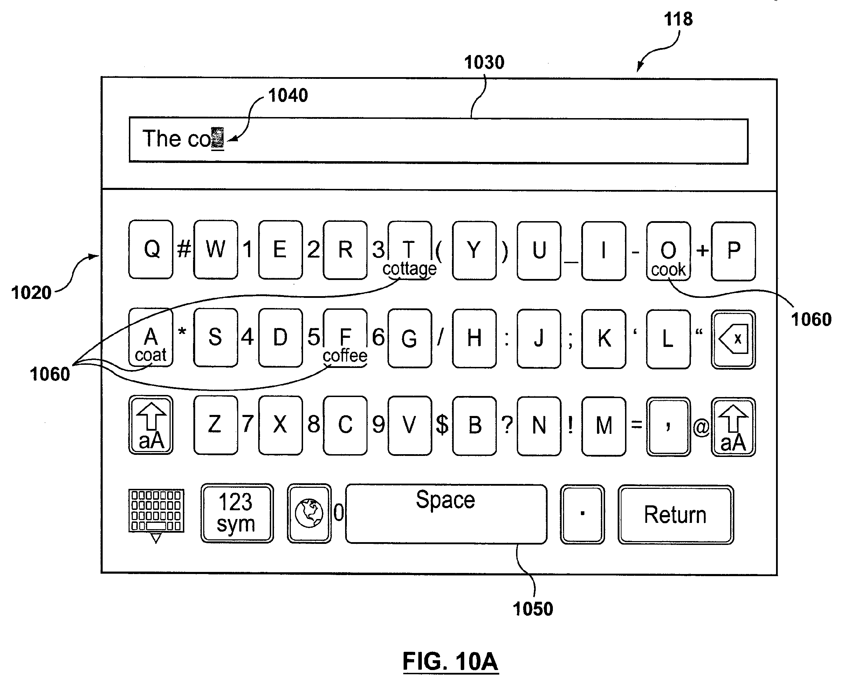

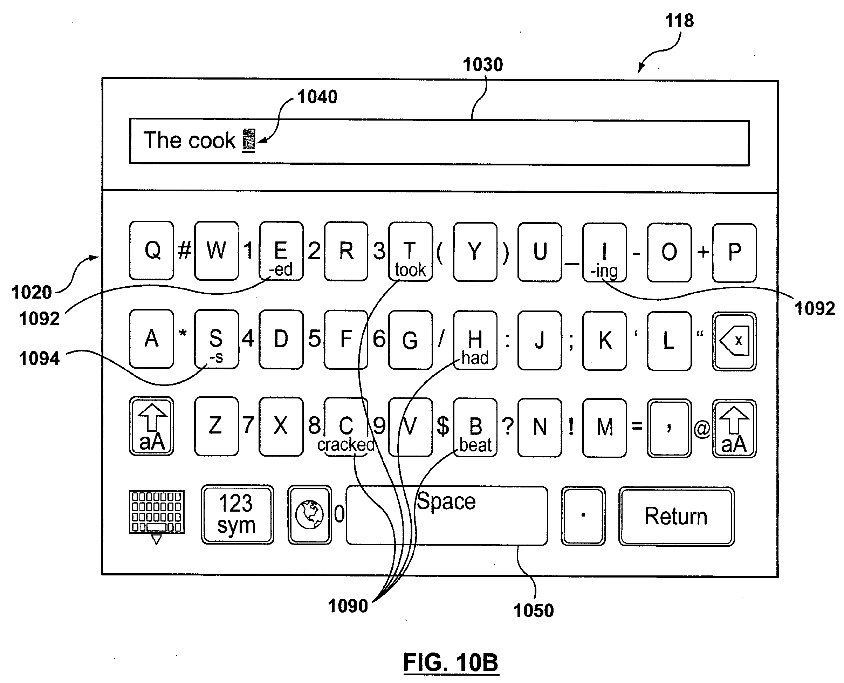

Figs. 10A and 10B show example front views of a touchscreen, consistent with embodiments disclosed herein. Fig. 10A shows an example where touchscreen 118 displays "The co" in a text bar 1030 and several generated set of characters 1060 are displayed at subsequent candidate input characters. In this example, touchscreen 118 displays generated set of characters "cottage" 1060 under the "T" key, generated set of characters "cook" 1060 under the "O" key, generated set of characters "coat" 1060 under the "A" key, and generated set of characters "coffee" 1060 under the "F" key.

Fig. 10B shows an example where touchscreen 118 receives the set of characters "cook" as input after the user has selected the generated set of characters 1060 "cook." The set of characters "cook" is inserted into input field 1030 along with a <SPACE> character. In this example, set of characters include new predicted set of characters (such as words 1090, affixes 1092 (for example, "- ed" under the "E" key and "-ing" under the "I" key), and plurals 1094 (for example, "-s" under the "S" key)), all of which are displayed at subsequent candidate input characters. Each predicted word 1090, affix 1092, or plural 1094 is located on respective subsequent candidate input characters that match the first letter of the predicted word 1090, affix 1092, or plural 1094. Now the user has the added option of inputting a predicted set of characters 1090, 1092, and 1094. Input is made in the same manner as described above. In some embodiments, when touchscreen 118 receives either affix 1092 or plural 1094 as an input, the <SPACE> character between cursor 1040 and "cook" is deleted and the corresponding inputted affix or plural is added to the end of "cook."

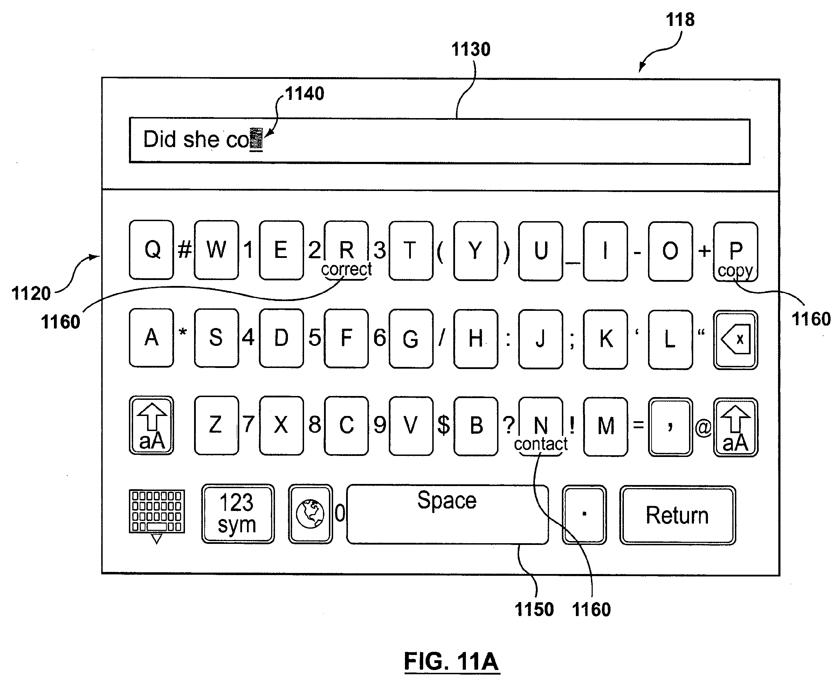

Fig. 11A shows an example where touchscreen 118 displays "Did she co" in a text bar 1130 and several generated set of characters 1160 are displayed at subsequent candidate input characters. In this example, touchscreen 118 displays generated set of characters "correct" 1160 under the "R" key, generated set of characters "copy" 1160 under the "P" key, and generated set of characters "contact" 1160 under the "N" key. While "co" is provided in the text bars of both Fig. 10A and Fig. 11A, touchscreen displays different generated set of characters based on the context of the characters in their respective text bars 1030 and 1130. For example, in Fig. 10A, the characters "co" follows "The," which implies that a noun beginning with "co" should follow. In Fig. 11A, the characters "co" follow a pronoun, which implies that a verb beginning with "co" should follow. As stated above, contextual data can be used to determine when certain set of characters are more appropriate based on, for example, the set of characters in a text bar or previous actions by a user.

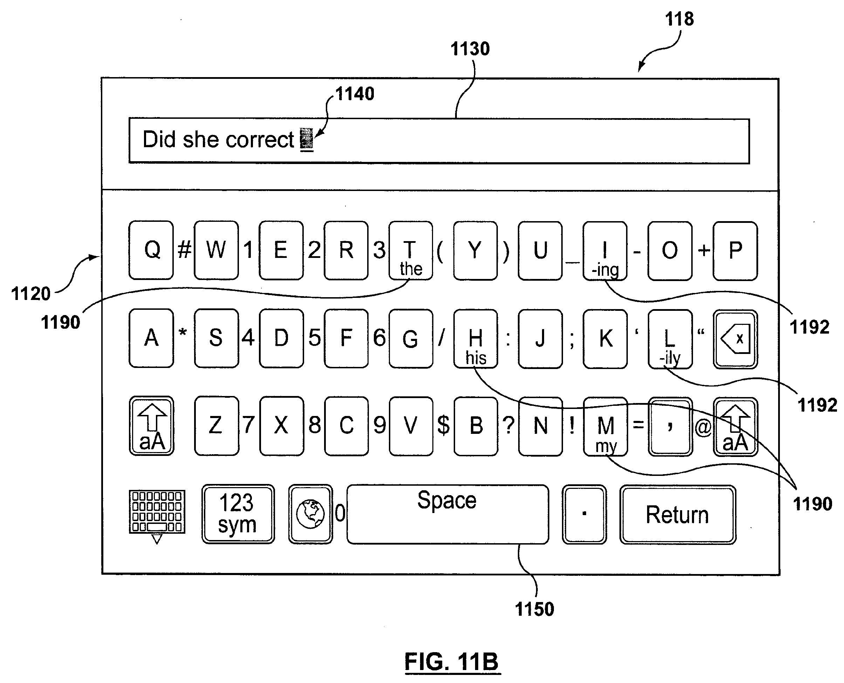

Fig. 11B shows an example where touchscreen 118 receives the set of characters "correct" as input after the user has selected the generated set of characters "correct" 1160. In this example, the set of characters "correct" is inserted in input field 1130 and a <SPACE> character is also inserted. Predicted set of characters (such as words 1190 and affixes 1192) are now displayed at subsequent candidate input characters. In this example, while affixes "-ing" and "- ily" both correspond to the "I" key, touchscreen 118 displays "-ing" with the "I" key and "-ily" with the "L" key. As stated above, the predicted affix may be assigned to a certain key based on a ranking, on contextual data, or a combination of both. In this embodiment, the "-ing" affix may have had a higher ranking than the "-ily" affix and was thus assigned to the "I" key. Accordingly, the "-ily" affix was assigned to the "L" key based on the corresponding "L" character being in the "-ily" affix.

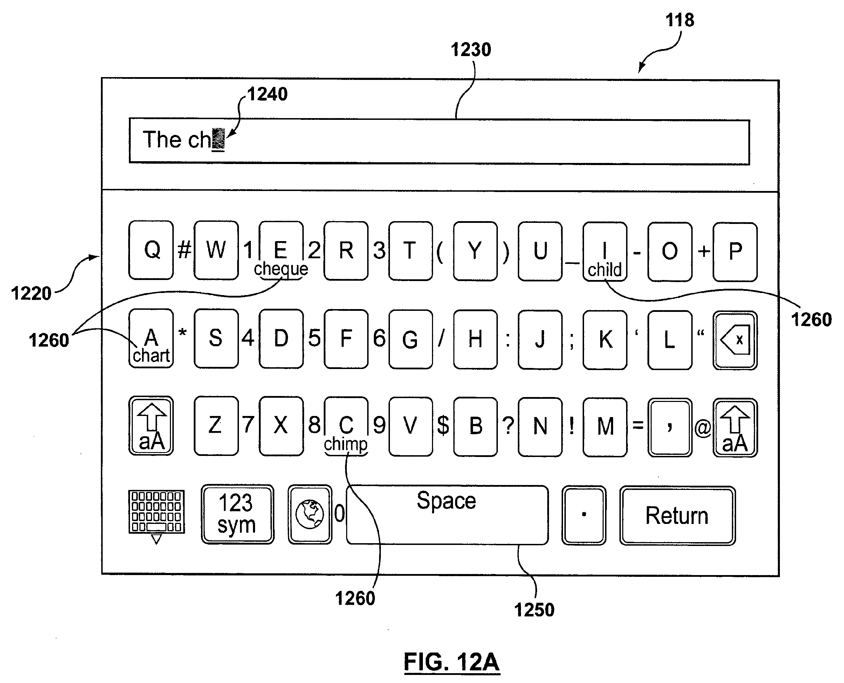

Fig. 12A shows an example where touchscreen 118 displays "The ch" in a text bar 1230 and several generated set of characters 1260 are displayed at subsequent candidate input characters. In this example, generated set of characters 1260 include both "child" and "chimp." In this embodiment, while the third letter in both "child" and "chimp" are the same, touchscreen displays "child" under the "I" key and displays "chimp" under the "C" key. The determination on which generated set of characters goes under which candidate input key can be based on a ranking (as specified above). As illustrated in this embodiment, touchscreen 118 can display a generated set of characters (in this case, "chimp") on a key even though that key may not be associated with any subsequent characters of the characters in text bar 1230.

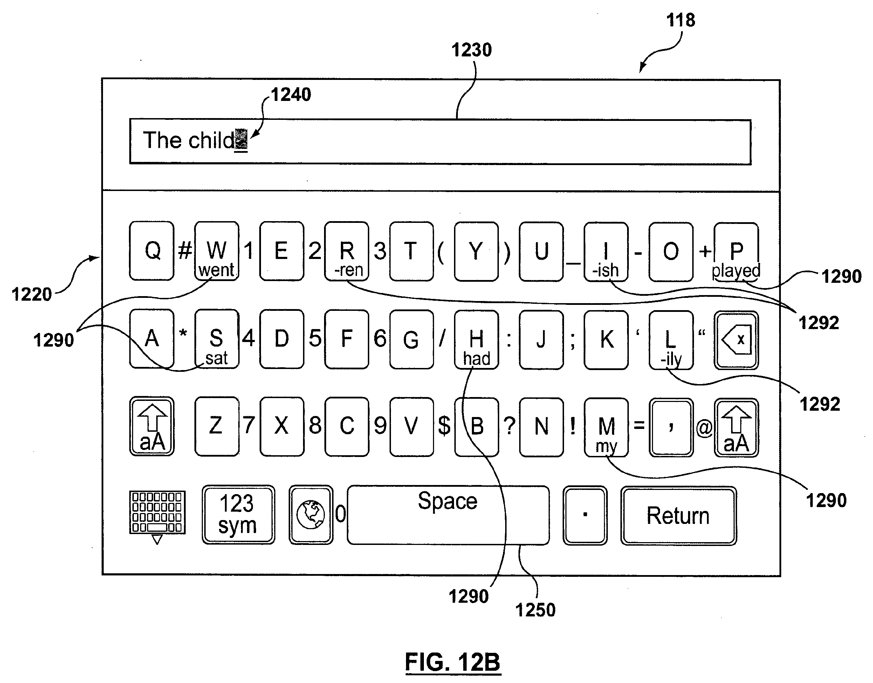

Fig. 12B shows an example where touchscreen 118 receives the set of characters "child" as input after the user has selected the generated set of characters "child" 1260. The set of characters "child" is inserted in input field 1230 and, in this example, a <SPACE> character is not inserted. Predicted set of characters (such as words 1290 and affixes 1292) are now displayed at subsequent candidate input characters. In this example, while affixes "-ish" and "-ily" both correspond to the "I" key, touchscreen 118 displays "-ish" with the "I" key and "- ily" with the "L" key. As stated above, the predicted affix may be assigned to a certain key based on a ranking, on conventional data, or a combination of both. In this embodiment, the "-ish" affix may have had a higher ranking than the "-ily" affix and was thus assigned to the "I" key. Accordingly, the "-ily" affix was assigned to the "L" key based on the corresponding "L" character being in the "-ily" affix.

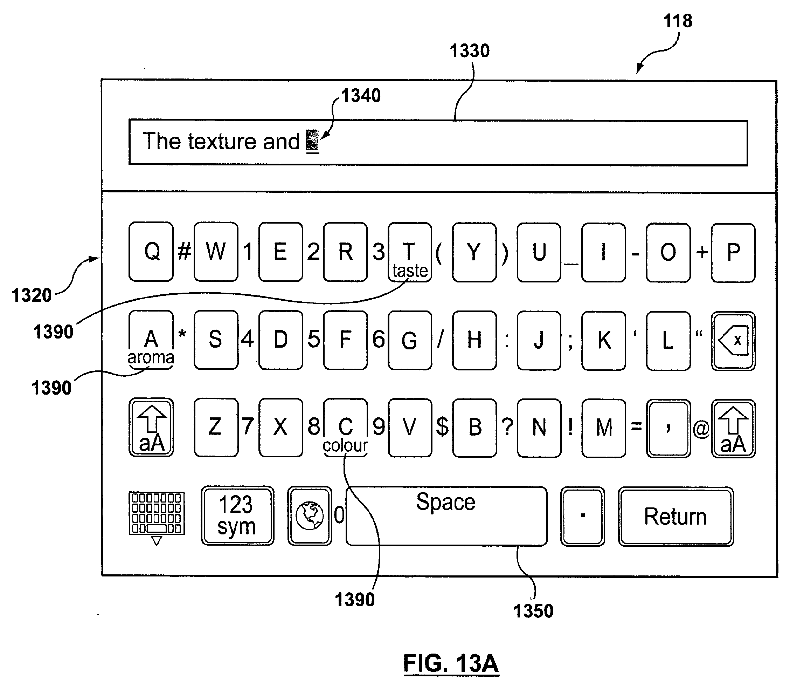

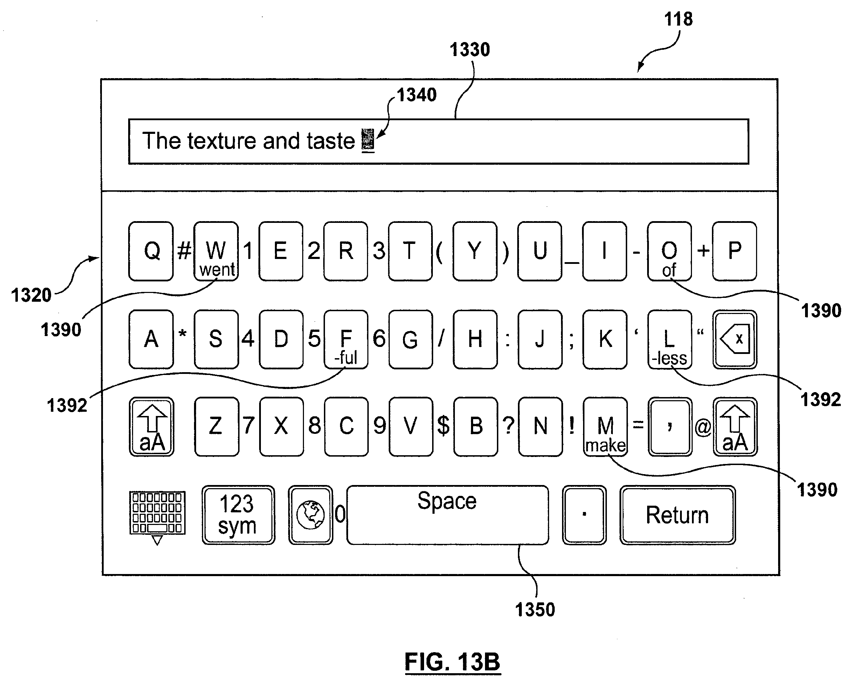

Fig. 13A shows an example where touchscreen 118 displays "The texture and" in a text bar 1330 and several predicted set of characters (for example, words 1390) are displayed at subsequent candidate input characters. Fig. 13B shows an example where touchscreen 118 received the set of characters "taste" as input after the user had selected the predicted set of characters "taste." In this example, a <SPACE> character was inserted after "taste." Consequently, predicted set of characters (such as, words 1390 and affixes 1392) are displayed at subsequent candidate input characters.

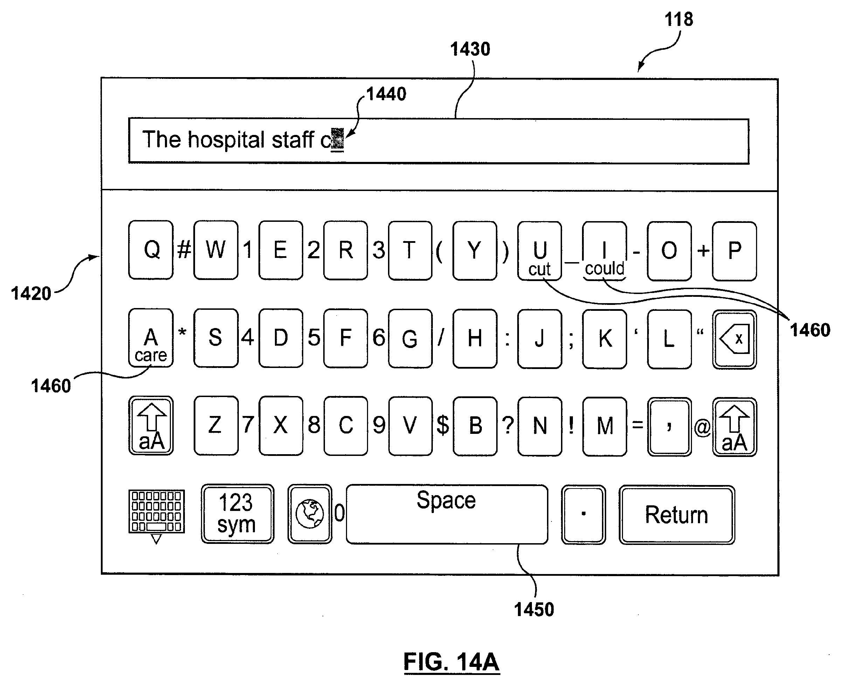

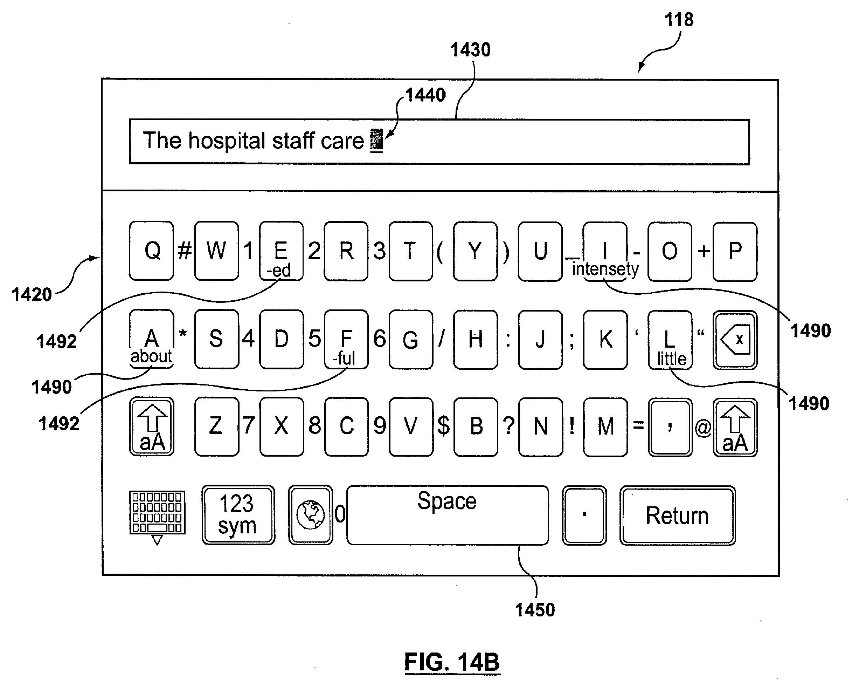

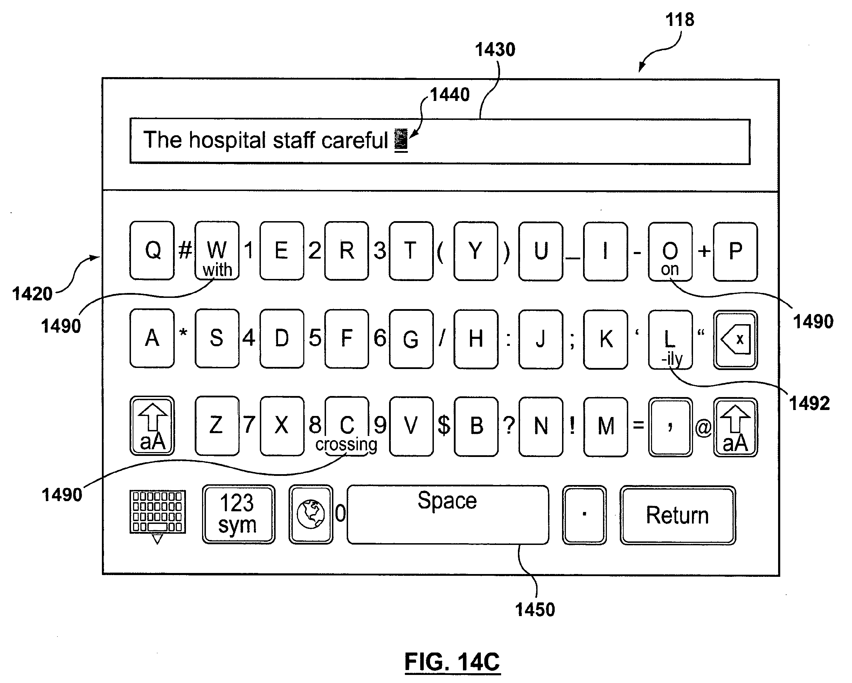

Fig. 14A shows an example where touchscreen 118 displays "The hospital staff c" in a text bar 1430 and several generated set of characters 1460 are displayed at subsequent candidate input characters. Fig. 14B shows an example where touchscreen 118 received the set of characters "care" as input after the user had chosen the generated set of characters "care." Generated set of characters "care" is now placed in input field 1430 along with a <SPACE> and predicted set of characters (such as, words 1490 and affixes 1492) are displayed at subsequent candidate input characters. Fig. 14C shows an example where touchscreen 118 received the affix "-ful" as input (thereby modifying the set of characters "care" to "careful") after the user had chosen the predicted affix "-ful." Thus, the set of characters "careful" is now inserted into input field 1430. Note, in some embodiments, inputting a word or affix can modify the input word or word fragment. For example, if "spicy" was input by a user, and "ness" is a predicted affix and is inputted, "spicy" would change to "spiciness," dropping the "y" and adding "iness". In other embodiments, "happy" could change to "happiness" or "conceive" could change to "conceivable".

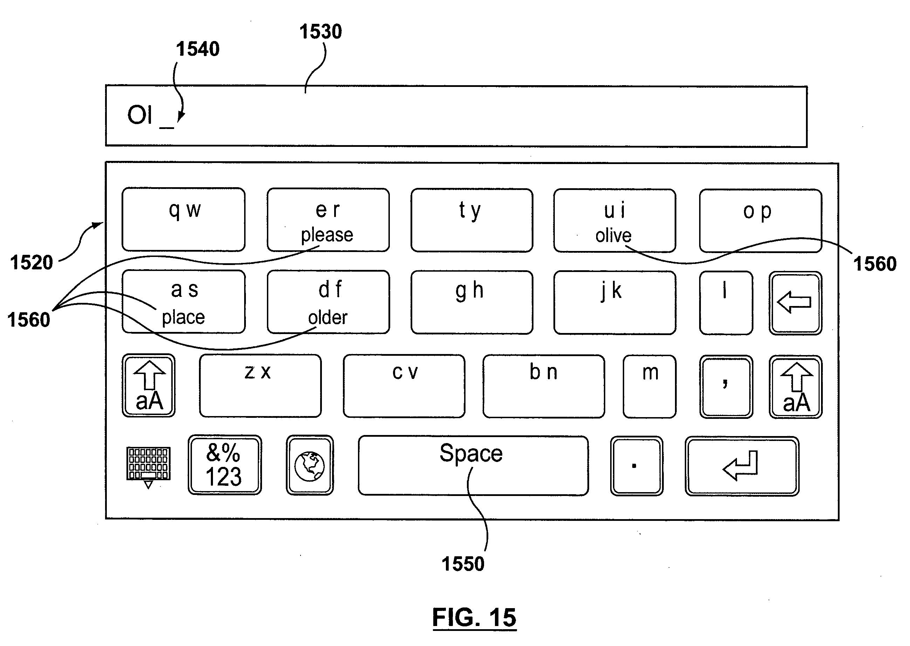

Fig. 15 shows an example of an ambiguous keyboard 1520, which can have multiple characters assigned to a key (for example, such as a telephone keypad where "A", "B" and "C" are assigned to key 2; "D", "E" and "F" are assigned to key 3, and so on). For example, the characters "Q" and "W" can be assigned one key, and the characters "E" and "R" assigned to another key. In this example, the user has input the characters "Ol" by pressing the "op" key followed by the "L" key. Using a predictor, generated set of characters 1560 are displayed at subsequent candidate input characters. Since the first pressed key can input either an "O" or a "P" and the second pressed key inputs an "L", generated set of characters 1560 will begin with "OL" or "PL", such as shown by generated set of characters 1560 in Fig. 15.

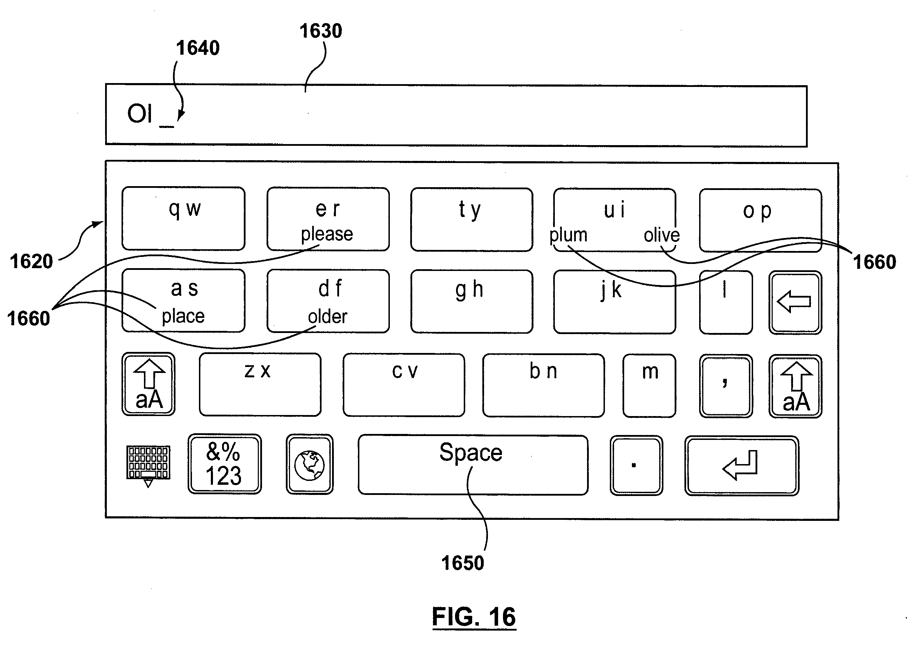

Fig. 16 shows another example of an ambiguous keyboard 1620. In this example, generated sets of characters "plum" and "olive" 1660 are displayed near the "ui" key. The sets of characters could also have been displayed at or on the "ui" key. Here, both sets of characters correspond to a particular input corresponding to a key, namely the third letter of plum is a "u" and the third letter of olive is an "i." Touchscreen 118 (via main processor 102) can differentiate between the input of either set of characters based on the user's action. For example, the user can swipe at or near the right of the "ui" key to input "olive", or swipe at or near the left of the "ui" key to input "plum".

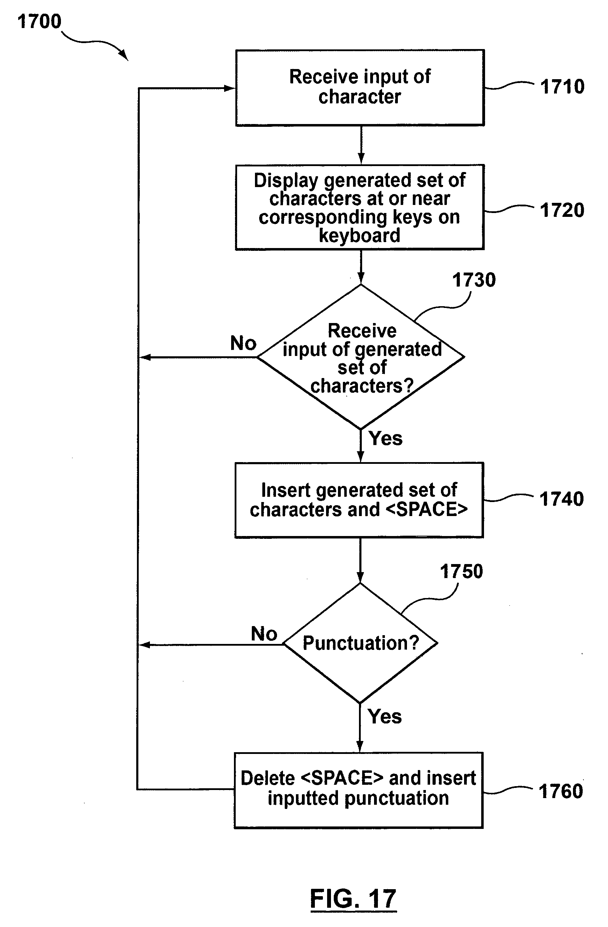

The examples and embodiments illustrated in Figs. 17, 18, and 19 can be implemented with any set of characters such as words, phrases, acronyms, names, slang, colloquialisms, abbreviations, or any combination thereof.

Fig. 17 shows in flowchart form a method 1700 in accordance with some embodiments. Method 1700 can be implemented with a processor, such as main processor 102, and stored on a tangible computer readable medium, such as hard drives, CDs, DVDs, flash memory, and the like. At block 1710, the processor receives an input of a character. At block 1720, the processor displays a generated set of characters at or near keys of subsequent candidate input characters on the touchscreen, such as described above.

At block 1730, the processor receives an input of the generated set of characters chosen by a user. If the user does not choose a generated set of characters displayed at or near keys of subsequent candidate input characters, the method restarts at block 1710, where the touchscreen can receive an input of another character. If a generated set of characters is received as input, at block 1740 the generated set of characters and a <SPACE> character is inserted in an input field (for example, input field 330 of Figs. 3-9). As mentioned previously, the user can choose the generated set of characters, for example, by swiping at or near it or by long pressing a key corresponding to the subsequent candidate input character.

Continuing at block 1750, if the processor detects that punctuation is not to be inserted, the method restarts at block 1710. If punctuation is to be inserted, the method continues to block 1760 where the <SPACE> character is deleted and the appropriate punctuation is added to the input field. After block 1760, the method starts over at block 1710.

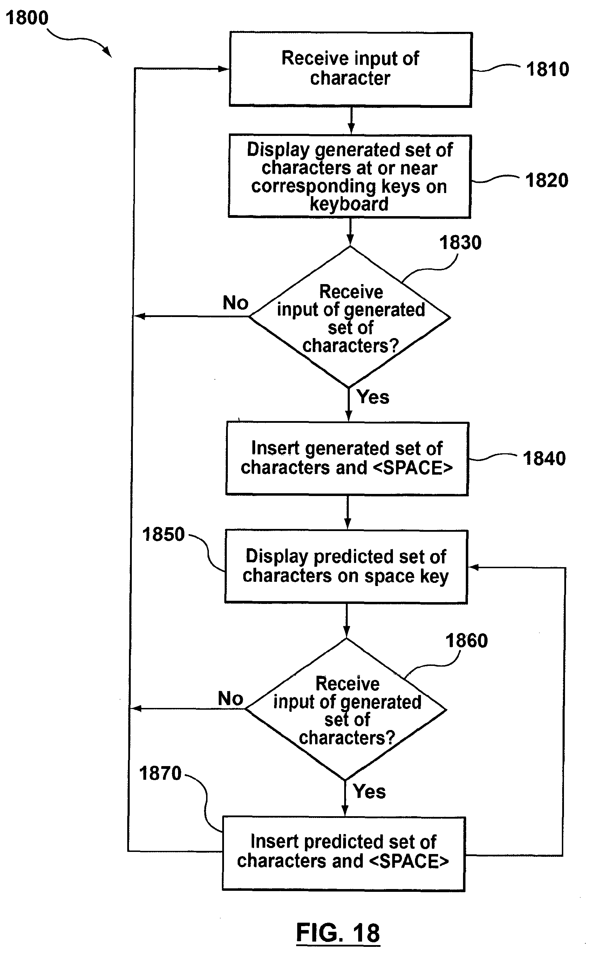

Fig. 18 is a flowchart illustrating example method 1800 in accordance with some embodiments. Method 1800 can be implemented with a processor, such as main processor 102, and stored on a tangible computer readable medium, such as hard drives, CDs, DVDs, flash memory, and the like. At block 1810, the processor receives an input of a character.

At block 1820, the processor displays a generated set of characters at or near a location on the keyboard corresponding to a subsequent candidate input character on a touchscreen. At block 1830, the processor receives an input of a generated set of characters chosen by a user. If the user does not choose a generated set of characters displayed at or near keys of subsequent candidate input characters, the method restarts at block 1810, where the processor can receive an input of another character. If a generated set of characters is received as input, at block 1840 the generated set of characters and a <SPACE> character is inserted in an input field (for example, input field 330 of Figs. 3-9). As mentioned previously, the user can choose the generated set of characters, for example, by swiping at or near it or by pressing a key corresponding to the subsequent candidate input character for a predetermined period of time.

At block 1850, a predicted set of characters, different from the generated set(s) of characters, is displayed on a space key of the keyboard after the input of the generated set of characters in block 1830. The predicted set of characters displayed in block 1850 is determined by using a predictor. In some embodiments, the one or more predicted sets of characters can be placed on one or more keys other than the space key.

At block 1860, the processor can determine whether it has received an input of the predicted set of characters based on a user input. If the touchscreen has not received an input of the predicted set of characters because the user has not chosen the predicted set of characters, the method restarts at block 1810. If the processor has received the input of the predicted set of characters, the method continues to block 1870, where the chosen predicted set of characters and a <SPACE> character is inserted in the input field. From here, method 1800 can return to either block 1810 or block 1850.

Even though method 1800 does not display the punctuation illustration as shown in method 1700, the punctuation illustration, as shown in blocks 1750 and 1760, can likewise be applied to method 1800.

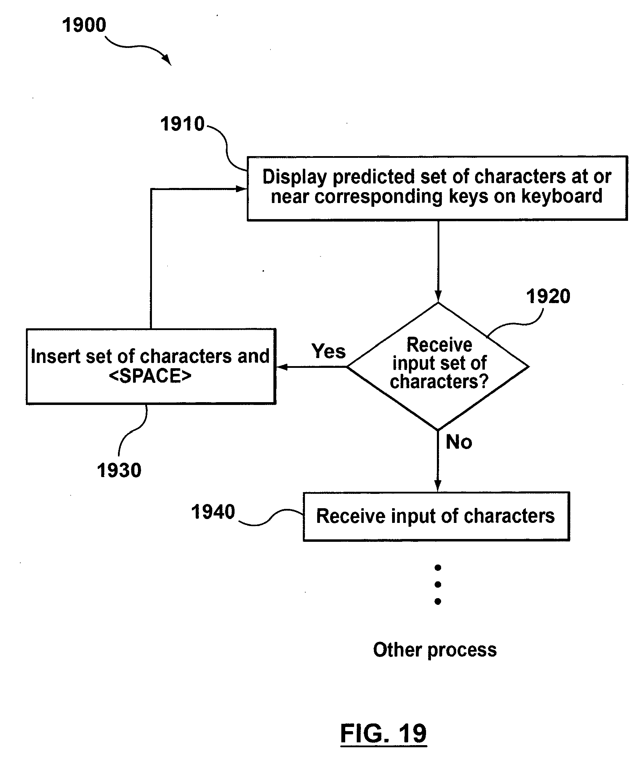

Fig. 19 is a flowchart illustrating an example method 1900 in accordance with some embodiments. At box 1910, predicted set of characters is displayed at corresponding subsequent candidate input characters. In these embodiments, an input has not been received or a delimiter has been activated, such as inputting a <SPACE>. Here, one or more predicted set of characters (such as, words, affixes, or a combination thereof) are placed on subsequent candidate input characters that correspond to the first letter of the generated set of characters. Moving to box 1920, it is determined whether the touchscreen receives an input of the set of characters (such as, word or affix) based on a user's selection. If an input is received, the method moves to block 1930 where the predicted set of characters and a <SPACE> character are inserted into an input field. Then the method starts over at block 1910. If the touchscreen does not receive an input of the set of characters, the touchscreen is available to receive an input of a character (as described by block 1710 of Fig. 17 or block 1810 of Fig. 18) and proceed through methods (such as methods 1700 of Fig. 17 or 1800 of Fig. 18 or even method 1900 of Fig. 19).

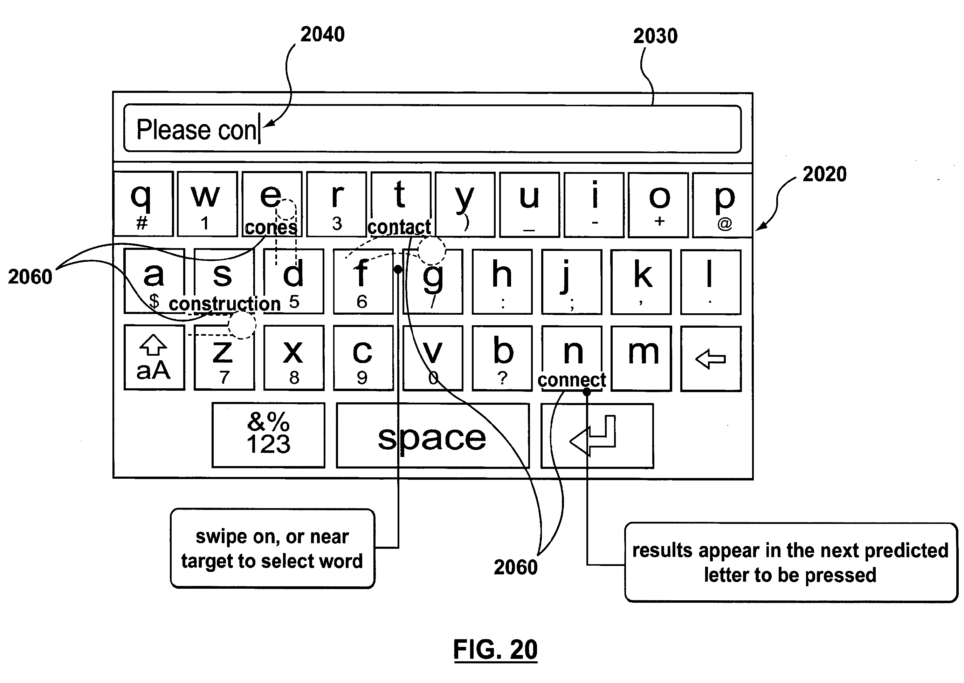

Fig. 20 shows another example of a virtual keyboard 2020 having an input field 2030. The set of characters "Please con" are received as input by the touchscreen and displayed in the input field 2030 followed by a cursor 2040, which can be a vertical line (as shown) or any other shape, such as an underscore as mentioned previously. A predictor determines one or more generated set of characters 2060 based in part on the received input for the current position of cursor 2040 within the current word, which is in the fourth character position of the current word, as shown in input field 2030. The current word is the word in which the cursor is currently located. In the shown example, generated set of characters 2060 "cones", "contact", "construction" and "connect" are displayed. Each generated set of characters 2060 is displayed at a key corresponding to a subsequent candidate input character (for example, under the E, T, S and N keys of the virtual keyboard 2020, respectively), for the current position of cursor 2040, which is in the third character position, as shown in input field 2030.

In the shown example, each generated set of characters 2060 is displayed at or near keys on the virtual keyboard 2020 associated with the subsequent candidate input characters. The display of a generated set of characters 2060 at or near a key corresponding to a subsequent candidate input character depends, for instance, on the size of the generated set of characters 2060 and the size of generated set of characters associated with nearby keys of other subsequent candidate input characters. When the generated set of characters associated with nearby keys in the same row of keys in the virtual keyboard 2020 are too large to be displayed at the same time without overlapping with each other or without a predetermined distance between the generated sets of characters, the processor 102 limits the generated set of characters which are displayed. The processor 102 may limit the generated set of characters which are displayed using one or any combination of the rank of each generated set of characters, the size of each generated set of characters, and a distance between each generated set of characters which are displayed so that a predetermined distance between the generated set of characters is maintained. This may result in the display of one or more generated sets of characters which are larger than the associated key in the virtual keyboard 2020.

In some examples, if two generated sets of characters are both ranked high, and these sets of characters would otherwise be displayed at nearby keys but cannot be displayed and still maintain a predetermined distance between the generated sets of characters at the display text size, the electronic device could be configured to display only the highest ranked generated set of characters. This results in the display of the most likely generated set of characters. In other examples, only the longest of the generated set of characters is displayed. This may be beneficial in that allowing faster entry of longer words saves time and processing cycles, thereby leveraging the predictive text input solution. In yet other examples, only the shortest generated set of characters is displayed. This may be beneficial in that shorter words can be more common, at least for some users, thereby allowing faster entry of words which saves time and processing cycles, thereby leveraging the predictive text input solution.

In some examples, the processor 102 may only limit the generated set of characters which are displayed in neighboring/adjacent keys in the same row of keys in the virtual keyboard 2020. In some examples, the processor 102 may limit the generated set of characters which are displayed in neighboring/adjacent keys in the same row of keys in the virtual keyboard 2020 so that a generated set of characters is never displayed in neighboring/adjacent keys irrespective of the size of the generated set of characters or distance between each generated set of characters. In such examples, the processor 102 uses the rank to determine which generated set of characters are displayed.

In other examples, the processor 102 can limit the generated set of characters which are displayed when the generated set of characters associated with nearby keys in different rows of keys in the virtual keyboard 2020 are too large to be displayed at the same time without overlapping with each other or without a predetermined distance between the generated sets of characters. In other examples, the processor 102 can limit the generated set of characters which are displayed when the generated set of characters associated with nearby keys in the same or different columns of keys in the virtual keyboard 2020 are too large to be displayed at the same time without overlapping with each other or without a predetermined distance between the generated sets of characters

As mentioned previously, a user can use a finger or stylus to swipe a generated set of characters to input that generated set of characters. An individual letter, in contrast, can be input by tapping a respective key in the virtual keyboard 2020 using a finger or stylus. The touchscreen differentiates between tap and swipe events using movement and duration of touch events, the details of which are known in the art and need not be described herein. Each key in the virtual keyboard 2020 and each generated set of characters 2060 which is displayed has an associated target area on the touchscreen. The target area associated with each generated set of characters can be larger than and/or overlap with the target area of the key corresponding to the subsequent candidate input character with which it is associated and possibly nearby keys, such as neighboring keys in the same row. A user need only swipe on or nearby a displayed generated set of characters to input the generated set of characters. This permits faster input of a generated set of characters by creating larger and more accessible target areas, thereby saving time and processing cycles. In some examples, a generated set of characters can be input by detecting a swipe in any direction at or near the displayed generated set of characters. In other examples, a generated set of characters can only be input by detecting a swipe in a particular direction at or near the displayed generated set of characters. The particular direction may be associated with a direction in which the particular direction displayed generated set of characters (e.g., left or right in the shown example). In some examples, the swipe is at or near the displayed generated set of characters when the swipe has an initial contact point within the target area associated with the displayed generated set of characters (which may be the same or larger than the displayed generated set of characters).

### Prediction Bar

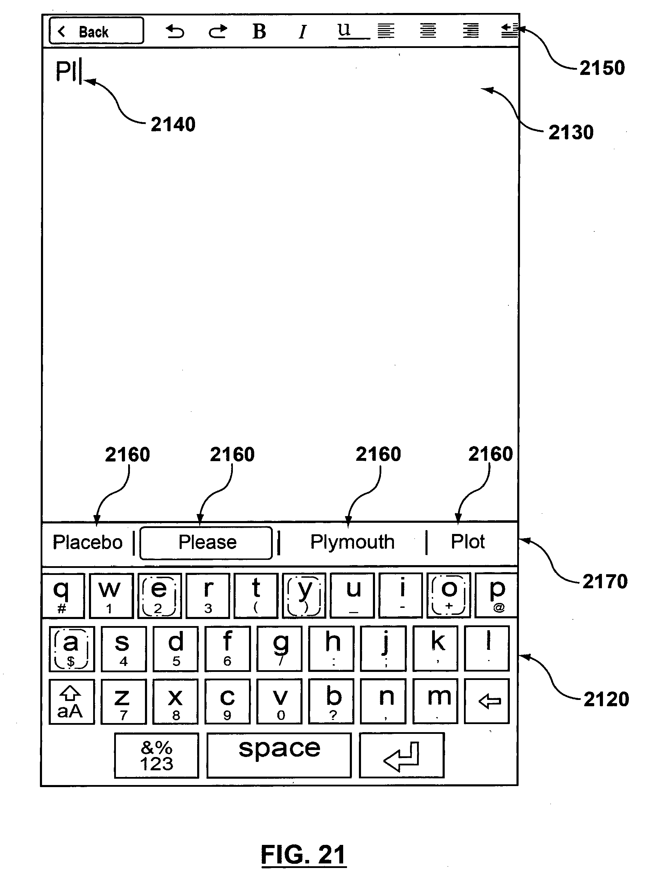

Fig. 21 shows another example of a user interface screen in accordance with the present disclosure in which one or more generated sets of characters are shown in a prediction bar 2170. The user interface screen has a virtual keyboard 2120 and an input field 2130. A text entry toolbar 2150 is displayed at the top of the user interface screen above the input field 2130. In some examples, the prediction bar 2170 is displayed proximate to the virtual keyboard 2120. In the shown example, the prediction bar 2170 is displayed above the virtual keyboard 2120 and below the input field 2130. The prediction bar 2170 could be located elsewhere in other embodiments.

The set of characters "Pl" are received as input by the touchscreen and displayed in the input field 2130 followed by a cursor 2140, which can be a vertical line (as shown) or any other shape, such as an underscore as mentioned previously. A predictor determines one or more generated sets of characters based in part on the received input for the current position of cursor 2140 within the current word, which is in the third character position of the current word, as shown in input field 2130. The current word is the word in which the cursor is currently located. In the shown example, the prediction bar 2170 displays a number of generated sets of characters 2160 "Placebo", "Please", "Plymouth" and "Plot". The displayed generated sets of characters 2160 may be all or a subset of the generated sets of characters generated by the predictor, as described elsewhere in the present disclosure. In the described example, the generated sets of characters are words; however, the generated sets of characters could each be a number of words, a phrase, acronym, name, slang, colloquialism, abbreviation, or any combination thereof.

In the shown example, the displayed generated sets of characters 2160 are provided in a button within the prediction bar 2170. While the prediction bar 2170 is illustrated in Fig. 21 as a visible bar spanning the width of the user interface screen, in some examples, the prediction bar 2170 may not be visible. For example, the prediction bar 2170 may be a region in which one or more sets of characters may appear without rendering of a bar. In such examples, the displayed generated sets of characters 2160 may each be shown in a button or bubble rendered and displayed in a portion of the user interface screen assigned to the prediction bar 2170 without rending of a bar.

In some examples, each displayed generated set of characters 2160 is located at a position corresponding to a position of a key of the subsequent candidate input character for the respective generated set of characters. In some examples, one or more of the displayed generated sets of characters 2160 are aligned such that the displayed generated sets of characters 2160 appear in the prediction bar 2170 at a position above the subsequent candidate input character corresponding to the respective generated set of characters. For example, in Fig. 21, after the characters "Pl" have been received, the generated set of characters "Please" is displayed on the prediction bar 2170 at a position above the input character "e" which corresponds to the subsequent input character after "Pl" in the word "Please". Similarly, the generated set of characters "Placebo" is displayed on the prediction bar 2170 at a position above the input character "a" which is the next character in "Placebo". The generated sets of characters "Plymouth" and "Plot" are also displayed on the prediction bar 2170 above their respective subsequent candidate input characters "y" and "o" respectively.

In other examples in which the prediction bar 2170 is displayed below the virtual keyboard 2120, the generated sets of characters may be displayed on the prediction bar 2170 at a position below their respective subsequent candidate input characters.

In the above described examples, each displayed generated set of characters 2160 is generally aligned with a column in the virtual keyboard 2120 in which a key of the subsequent candidate input character for the respective generated set of characters is located, either above or below the virtual keyboard 2120.

The size of the text in which the generated sets of characters are displayed is typically fixed, but may be variable. When the size of text of the displayed generated sets of characters 2160 is fixed, the size of a displayed generated set of characters 2160 increases with the length of the generated set of characters. A variable size of the displayed generated sets of characters 2160 may reduce the number of the generated sets of characters 2160 which can be displayed in some instances. The use of a variable size of text of the displayed generated set of characters 2160 may permit a fixed number of generated sets of characters to be displayed, and may increase the number of generated sets of characters which may be displayed in some instances.

By positioning a generated set of characters at a position in the prediction bar 2170 corresponding to the position of the respective subsequent candidate input character, a user may only have to glance above (or below) the next key he/she is about to press to view any generated set of characters which are available. For example, in Fig. 21, if the user wishes to input the word "Please", the user would press the "e" key next; however, upon glancing above the "e" key to the prediction bar 2170, the user can recognize that the desired "Please" generated set of characters is available. In some examples, this may allow a user to be able to quickly determine whether the desired generated set of characters is available without diverting his/her attention too far from the next letter he/she is planning on pressing. Furthermore, in some examples, this eliminates the need for the user to consider or even read any of the generated sets of characters which are not positioned above the next letter the user was about to press. For example, in Fig. 21, the user wishing to input "Please" will have his/her focus on the "e" key and will only have to glance at the word directed above the "e" key to determine whether the desired set of characters is available. In this example, the user will not have to read any of the other words because they are not positioned above the subsequent candidate input key. In some examples, this reduction in the number of words the user has to read and consider may decrease the amount time expended considering undesired predictions. In some examples, this may reduce the amount of movement and strain on the user's eyes.

The keys corresponding to the subsequent candidate input characters in each of the displayed generated sets of characters are displayed in a second format which is different from a first format in which other keys in the virtual keyboard 2120 are displayed. The second format in which the subsequent candidate input characters in each of the displayed generated sets of characters are displayed provides a visual indication associated with the generated sets of characters. In some examples, the keys corresponding to the subsequent candidate input characters in each of the displayed generated sets of characters are highlighted. For example, in Fig. 21, the "a", "e", "y" and "o" keys, which correspond to the subsequent candidate input characters in the four displayed generated sets of characters 2160, are highlighted.

In some examples, the highest ranked generated set of characters is highlighted in the prediction bar 2170. For example, in Fig. 21, the highest ranked generated set of characters is "Please" so it is highlighted in the prediction bar 2170.

Examples of highlighting a key include changing a background colour of the key, backlighting the key, brightening the key, underlining the character displayed in the key, bolding the character displayed in the key, italicizing the character displayed in the key, changing the colour of the character displayed in the key, changing the size of the key, or any combination thereof, or in any other way making the key more visible. The highlighting may be applied to the entire key or to portions of the key, such as the edge around each key, the character displayed within each key, areas within each key, or areas surrounding each key.

In some examples, highlighting a key corresponding to the subsequent candidate input character provides a visual cue or hint that a generated set of characters exists and matches the input character(s) of the current word being entered so that the user can choose to review the predictions in the prediction bar 2170, if desired. Conversely, the absence of any highlighted keys provides a visual indication that the input character(s) do not match a generated set of characters and, therefore, there are no predictions to review in the prediction bar 2170. This allows the user to maintain focus on the virtual keyboard 2120 and only glance up at the prediction bar 2170, if desired, when the visual indication concerning the availability of predictions is provided. In some examples, this may reduce the amount of movement and strain on the user's eyes.

The highlighting of the keys corresponding to the subsequent candidate input characters also provides visual affordance to the user that the input characters match generated sets of characters and, therefore, likely match a known word or other generated sets of characters. The visual affordance increases with each input character which continues to result in one or more generated sets of characters. As the string of input characters grows and the string of input characters still matches one or more generated sets of characters as indicated by the highlighting of keys corresponding to the subsequent candidate input characters in each of the displayed generated sets of characters, the user has increased assurance of the accuracy of the string of input characters. The highlighting of keys corresponding to the subsequent candidate input characters effectively provides an illuminated path of the matching predictions which assures the user of his or her typing accuracy. Thus, the user can limit glances at the prediction bar (if desired) to when a subsequent character he or she is about to input is highlighted. Conversely, the absence of any highlighting of keys provides a visual indication that the input characters may contain an error, particularly when the user knows that the input string is a relatively common or known word or other generated sets of characters. This provides a hint or cue of a potential error in the input characters in the current word being input in the input field 2130.

As mentioned previously, in some examples a user can use a finger or stylus to tap a displayed generated set of characters 2160 in the prediction bar 2170 to input the generated set of characters. In some examples, a user can swipe at or near the key corresponding to the subsequent candidate input character for a displayed generated set of characters 2160 to input that generated set of characters. In yet other examples, a user can swipe at or near a portion of the virtual keyboard 2120 corresponding to a displayed generated set of characters 2160 in the prediction bar 2170 to input a generated set of characters. The portion of the virtual keyboard 2120 corresponding to a displayed generated set of characters may be the button or bubble in which it is displayed, or possibly anywhere on the virtual keyboard 2120 in the region above or below the portion of the prediction bar 2170. For example, in Fig. 21, to input the generated set of characters "Please", a user can tap the "Please" button of the prediction bar 2170, or in some examples, the user may swipe the "e" key, or in some examples, the user may swipe the "Please" button or the portion of the keyboard directly above or below the "Please" button of the prediction bar 2170.

An individual letter can be input by tapping a respective key in the virtual keyboard 2120 using a finger or stylus. The touchscreen differentiates between tap and swipe events using movement and duration of touch events, the details of which are known in the art and need not be described herein. Each key in the virtual keyboard 2120 and each generated set of characters 2160 which is displayed has an associated target area on the touchscreen. The target area associated with each generated set of characters is typically the same size or larger than the displayed generated set of characters. A user need only tap or swipe on or near a displayed generated set of characters 2160 to input the generated set of characters. This permits relatively fast input of a generated set of characters by creating relatively large and accessible target areas, thereby saving time and processing cycles. In some examples, a generated set of characters can only be input by detecting a swipe in a particular direction. In some examples, the particular direction is "up" such that only an up" swipe can input a generated set of characters. In some examples, the swipe is at or near the displayed generated set of characters when the swipe has an initial contact point within the target area associated with the displayed generated set of characters 2160 (which may be the same or larger than the displayed generated set of characters 2160).

In some examples, the generated sets of characters are only displayed in the prediction bar 2170 when a threshold number of characters have been input (e.g., 3 characters have been input), the generated sets of characters have a predicted likelihood or rank which exceeds a probability threshold, a duration of time since a first character in the current word or input string in the input field 2130 was input, or a duration of time since a last character was input in the input field 2130. This avoids drawing the user's attention away from the virtual keyboard 2120 and toward the prediction bar 2170 when the likelihood that the predictions reflect the word intended by the user is low. In other examples, the generated sets of characters are displayed in the prediction bar 2170 but the virtual keyboard 2120 does not highlight the keys corresponding to the subsequent candidate input characters until a threshold number of characters have been input in the current word or input string in the input field 2130 (e.g., 3 characters in the current word have been input) or the generated sets of characters have a predicted likelihood or rank which exceeds a probability threshold.

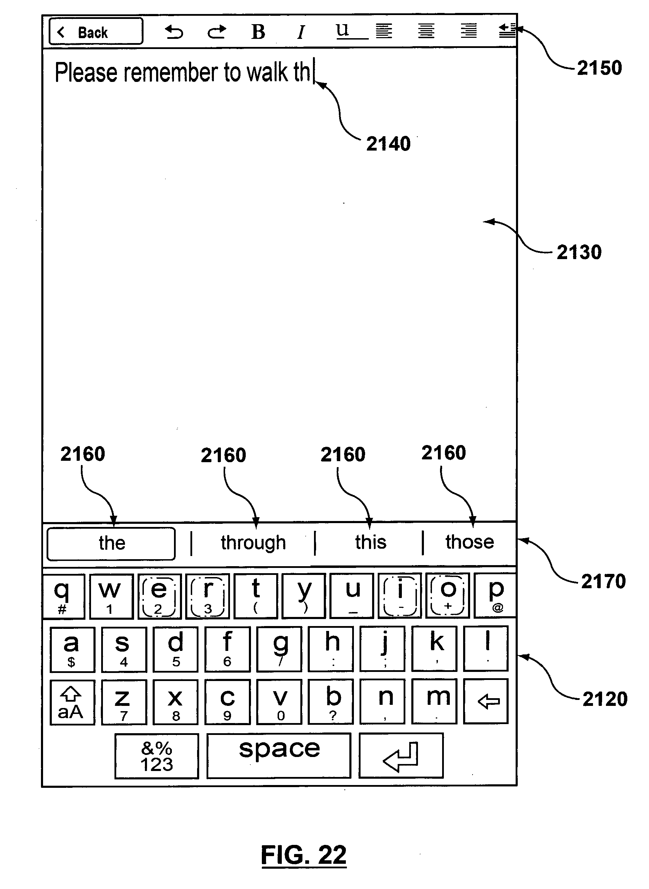

The position of the generated set of characters in the prediction bar 2170, in at least some examples, may be based on the rank of each generated set of characters, as described in connection with Fig. 22. Fig. 22 shows another example of a user interface screen having a virtual keyboard 2120 and an input field 2130. The set of characters "Please remember to walk th" are received as input by the touchscreen and displayed in the input field 2130 followed by a cursor 2140, which can be a vertical line (as shown) or any other shape, such as an underscore as mentioned previously.

The processor 102 determines a position in the prediction bar 2170 in which a generated set of characters is to be displayed using the rank of each generated set of characters. The generated set of characters having the highest rank is displayed in a position corresponding to the position of the key of the respective subsequent candidate input character of the generated set of characters having the highest rank. In the shown example, the generated set of characters "the" has the highest rank and the subsequent candidate input character of the generated set of characters is the letter "e". Accordingly, the generated set of characters "the" is located in the prediction bar above the "e" key.

The processor 102 then determines a position in the prediction bar 2170 for a generated set of characters having the next highest rank (i.e., second highest rank). If this position is already allocated to a generated set of characters (e.g., the highest ranked generated set of characters, which in the shown example is allocated to the left side of the prediction bar), the generated set of characters is discarded. For example, if the generated set of characters "these" has the second highest rank, the prediction "these" would be discarded since the position in the prediction bar would overlap with the position allocated to the generated set of characters having the highest rank, "the". The processor 102 then determines the position in the prediction bar for a generated set of characters having the next highest rank (i.e., third highest rank). If this position is already allocated to a generated set of characters (e.g., the highest ranked generated set of characters), the generated set of characters is discarded. This process is repeated until the prediction bar has been filled or no generated set of characters remain. In the shown example, the generated set of characters "through" is displayed at a middle position in the prediction bar above the key corresponding to the subsequent candidate input character "r", and the generated set of characters "those" is displayed at a right position in the prediction bar above the key corresponding to the subsequent candidate input character "o".

The number of generated sets of characters which are displayed in the prediction bar 2170 may be fixed or variable. For example, in Fig. 21, the prediction bar 2170 displays four generated sets of characters; however, in other examples, three, five or any suitable number of generated sets of characters may be displayed. The number of generated sets of characters which are displayed (i.e., the number of positions in the prediction bar 2170) may dynamically vary depending on the rank and/or length of the generated sets of characters for a given text size (which is typically fixed). For example, if the highest ranked generated set of characters is long (either with respect to the number of characters in the set or with respect to the widths of those characters), fewer generated sets of characters will fit on the prediction bar 2170. Conversely, if the highest ranked generated sets of characters are short, more space is available for more generated sets of characters on the prediction bar 2170. In some examples, if a next highest ranked generated set of characters does not fit on the prediction bar 2170, that generated set of characters is discarded and a subsequent highest ranked generated set of characters is selected.

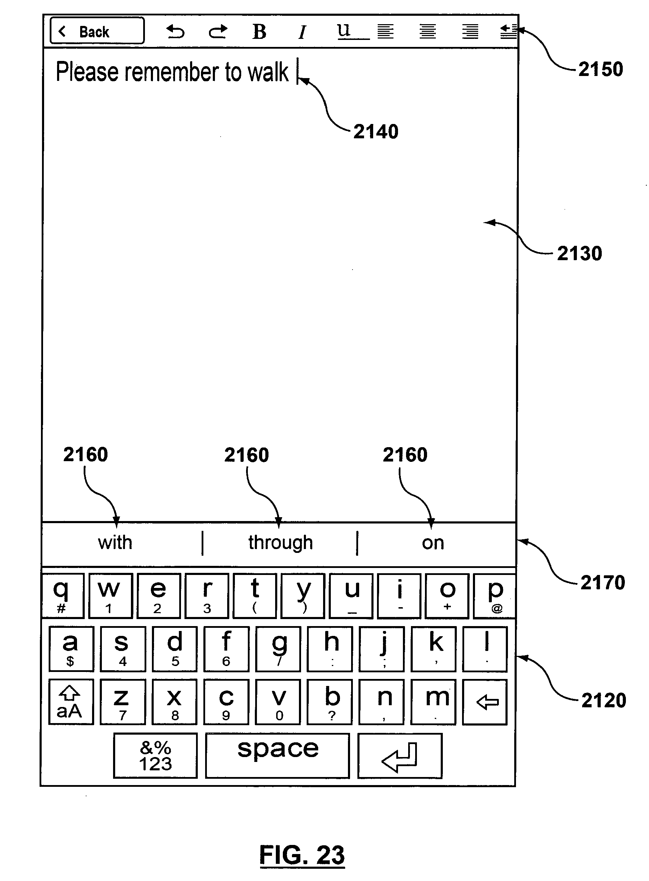

Fig. 23 shows another example of a user interface screen having a virtual keyboard 2120 and an input field 2130. The set of characters "Please remember to walk" are received as input by the touchscreen and displayed in the input field 2130 followed by a cursor 2140, which can be a vertical line (as shown) or any other shape, such as an underscore as mentioned previously. A previous set of characters "walk" has been input but the user has not input any characters in a current word or other set of characters. In this example, the processor 102 generated and displayed a number of generated sets of characters 2160 before the user has inputted any characters in the current set of characters. In this example, the subsequent candidate input character for the generated set of characters "with" is the "w" character; therefore, the "with" generated set of characters is displayed at a position in the prediction bar 2170 above the "w" key. Similarly, the generated set of characters "through" is positioned above the "t" key, and the generated set of characters "on" is positioned above the "o" key. In the shown example, the keys corresponding to the subsequent candidate input characters are not highlighted for the generated sets of character 2160 because the user has not input any characters in the current set of characters (e.g., next word predictions). However, in other examples, the keys corresponding to the subsequent candidate input characters may be highlighted even when the user has not input any characters in the current set of characters (e.g., next word predictions).

While the one or more generated set of predicted input characters have been described in the context of the prediction bar 2170 in the above described examples, in other examples the one or more generated set of predicted input characters may be displayed outside of the virtual keyboard 2120. For example, the one or more generated set of predicted input may be displayed inline with the input characters in the input field 2130, or above or below the cursor 2140 in the input filed 2130. It is also contemplated that the one or more generated set of predicted input characters may be displayed on an external display (not shown) connected, wirelessly or by wireless/cable connection, to the electronic device 100. For example, the virtual keyboard 2120 may behave in the manner previously mentioned, whereas the contents of the prediction bar 2170 may be displayed on an auxiliary display provided by a display of a computer or television to which the electronic device 100 is connected. The auxiliary display is external to the display (e.g., touchscreen 118) on which the virtual keyboard is rendered and displayed. Advantageously, this allows more space to be dedicated to the virtual keyboard 2120 and/or input filed 2130 on the electronic device 100 while providing a larger display area for the generated set of predicted input characters.

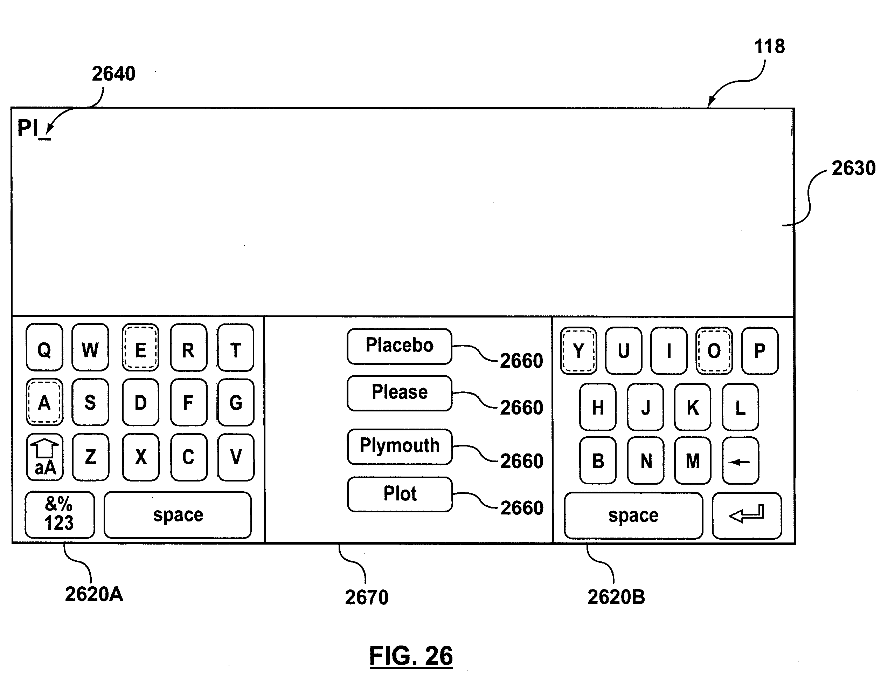

Fig. 26 shows another example of a user interface screen in accordance with the present disclosure in which generated sets of characters are shown in a prediction bar 2670. The user interface screen has an input field 2630 including a cursor 2640, which can be a vertical line (as shown) or any other shape, such as an underscore as mentioned previously. The set of characters "Pl" are received as input by the touchscreen and displayed in the input field 2630 followed by the cursor 2640. A predictor determines one or more generated set of characters based in part on the received input for the current position of cursor 2640 within the current word, which is in the third character position of the current word, as shown in input field 2630.

The user interface screen has a two-part virtual keyboard having a left portion 2620A and a right portion 2620B. The keys of the virtual keyboard are generally similar to the keys in the virtual keyboard 2120 described previously; however, the keys are split between the left portion 2620A and the right portion 2620B and the "Space" bar key is duplicated so that a "Space" bar key appears in each of the left portion 2620A and the right portion 2620B. The size of the keys and spacing between the keys in the left portion 2620A and the right portion 2620B may vary slightly from that of the virtual keyboard 2120 in Fig. 21. The prediction bar 2670 is displayed proximate to the virtual keyboard. In the shown example, the prediction bar 2670 is displayed between left portion 2620A and the right portion 2620B. In the shown example, the generated sets of characters 2660 are shown in a button or bubble. The operation of the virtual keyboard and prediction bar 2670 are generally similar to that described above in connection with Fig. 21-23.

In the shown example of Fig. 26, the displayed generated sets of characters 2660 are not located at a position corresponding to a position of a key of the subsequent candidate input character for the respective generated set of characters as described above. However, in other examples, each displayed generated set of characters 2660 may be located at a position corresponding to a position of a key of the subsequent candidate input character for the respective generated set of characters. For example, each displayed generated set of characters 2660 may be generally aligned with a row in the virtual keyboard 2620A or 2620B in which a key of the subsequent candidate input character for the respective generated set of characters is located. More than one generated set of characters 2660 may be displayed per row in the virtual keyboard 2620, if desired, to increase the number of displayed generated sets of characters 2660.

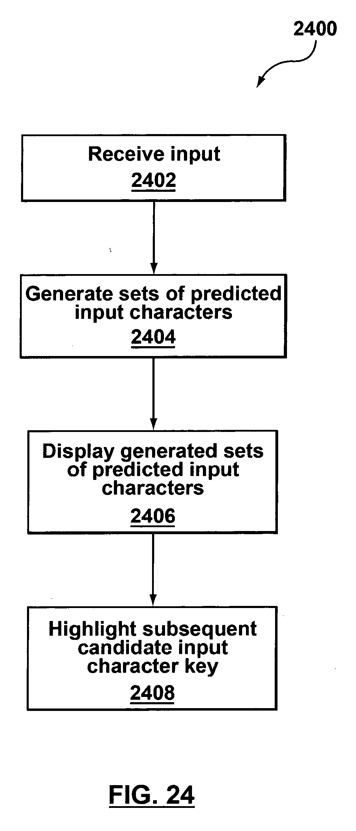

Fig. 24 shows in flowchart form a method 2400 in accordance with some embodiments. The method 2400 can be implemented with a processor, such as main processor 102, and stored on a tangible computer readable medium, such as hard drives, CDs, DVDs, flash memory, and the like. At block 2402, the processor receives an input of a character. At block 2404, the processor generates one or more sets of predicted input characters. Typically, each set of predicted input characters corresponds to a predicted word. Each set of predicted input characters includes a subsequent candidate input character. A subsequent candidate input character corresponds to a next letter of the predicted input characters (e.g., predicted word), as mentioned previously.

At block 2406, the one or more generated sets of predicted input characters is displayed. In some examples, the one or more generated set of predicted input characters are displayed within the prediction bar as mentioned previously. The one or more generated set of predicted input characters may be displayed at a location corresponding to a position of a key of the subsequent candidate input character. The prediction bar may be located, for example, above the position of the key of the subsequent candidate input character.

In other examples, the one or more generated sets of predicted input characters are displayed elsewhere outside of the virtual keyboard 2120. The one or more generated sets of predicted input may be displayed inline, or above or below the cursor 2140 in the input filed 2130. The one or more generated sets of predicted input characters may be displayed on an external display connected, wirelessly or by wireless/cable connection, to the electronic device 100.

At block 2408, the key corresponding to the subsequent candidate input character is highlighted.

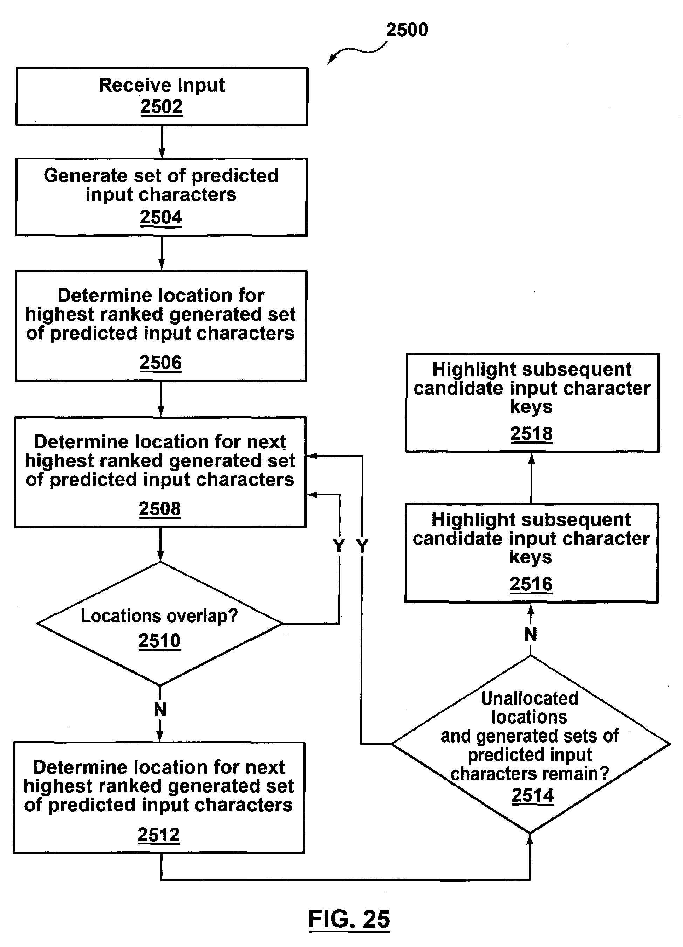

Fig. 25 shows in flowchart form a method 2500 in accordance with some embodiments. The method 2500 can be implemented with a processor, such as main processor 102, and stored on a tangible computer readable medium, such as hard drives, CDs, DVDs, flash memory, and the like. At block 2502, the processor receives an input of a character. At block 2504, the processor generates one or more sets of predicted input characters. Each set of predicted input characters includes a subsequent candidate input character. A subsequent candidate input character corresponds to a next letter of the predicted input characters (e.g., predicted word), as mentioned previously.

At block 2506, the highest ranked set of predicted input characters is allocated to a first location of the prediction bar. The first location corresponds to a position of a key of the subsequent candidate input character for the highest ranked generated set of predicted input characters.

At block 2508, a location for the next highest ranked set of predicted input characters is determined. The location corresponds to a position of the key of the subsequent candidate input character for the next highest ranked generated set of predicted input characters.

If the determined location is not already allocated to a generated set of characters (decision block 2510), the determined location is allocated to the next highest ranked set of characters (block 2512). If the determined location is already allocated to a generated set of characters (decision block 2510), the location for the further next highest ranked set of characters is determined (block 2508).

At decision block 2514, it is determined whether any locations in the prediction bar remain unallocated, and if so, whether any generated sets of predicted input characters remain. If so, the location for the next highest ranked set of characters is then determined (block 2508). If not, all locations in the prediction bar have been allocated or no next highest rank set of predicted input characters exists. Then, at block 2516, the generated sets of predicted input characters allocated to locations in the prediction bar are displayed at their allocated locations. At block 2518, the keys corresponding to the subsequent candidate input characters for the generated sets of predicted input characters having allocated locations are highlighted.

While not shown in Figs. 24 or 25, a user can use a finger or stylus to tap or swipe a display generated set of characters to input that generated set of characters as discussed previously. In some examples, the user can swipe the key corresponding to the subsequent candidate input character to input the corresponding displayed generated set of predicted input characters. In some examples, the user can swipe a portion of the virtual keyboard at or near (e.g., above or below) the location of the generated set of characters to input those characters.

An individual letter, in contrast, can be input by tapping a respective key in the virtual keyboard 2120 using a finger or stylus. In some examples, the method continues with operations of block 1750 and 1760 (not shown) as mentioned previously in connection with the method 1700 and Fig. 17. Continuing at block 1750, if the processor detects that punctuation is not to be inserted, the method restarts at block 2510. If punctuation is to be inserted, the method continues to block 1760 where the <SPACE> character is deleted and the appropriate punctuation is added to the input field. After block 1760, the method starts over at block 2402 or block 2502.

It will be appreciated that the described embodiments present a compromise between displaying the most highly ranked predictions and displaying the predictions in a manner which facilitates the use and selection of predictions as input. While the most highly ranked prediction will always be displayed, other displayed predictions may not represent the next most highly ranked predictions. While less ranked predictions may not be the most highly ranked predictions, the predictions are still highly ranked predictions and the displayed predictions are located at set positions with the virtual keyboard 2120 rather than moving around the virtual keyboard 2120 based on the subsequent candidate input character. This facilitates the use and selection of predictions as input rather than the user typing out the entire word and ignoring predictions, thereby saving time and processing cycles and leveraging the predictive text input solution.

While the various methods of the present disclosure have been described in terms of functions shown as separate blocks in the Figures, the functions of the various blocks may be combined during processing on an electronic device. Furthermore, some of the functional blocks in the Figures may be separated into one or more sub steps during processing on an electronic device.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from the subject matter of the claims. The described example embodiments are to be considered in all respects as being only illustrative and not restrictive.

## Claims

1. A method for providing a virtual keyboard (2020) displayed on a display. (112) of a handheld electronic device with visual cues, the virtual keyboard having a plurality of keys arranged in a conventional key configuration, the method comprising:
receiving an input of a character from the virtual keyboard;
displaying a plurality of sets of predicted input characters in a prediction bar (2170), wherein each set of predicted input characters is located within the prediction bar at a different respective position corresponding to a position of a key of a subsequent candidate input character in the respective set of predicted input characters.

2. The method of claim 1, further comprising:
highlighting one or more keys in the virtual keyboard corresponding to the subsequent candidate input character in the each of the plurality of sets of predicted input characters.

3. The method of claim 1 or claim 2, wherein each one of the plurality of sets of predicted input characters within the prediction bar is aligned vertically with the position of a key of a subsequent candidate input character.

4. The method of any one of claims 1 to 3, further comprising:
allocating a first location in the prediction bar for a highest ranked set of predicted input characters, the first location corresponding to the position corresponding to the key of the subsequent candidate input character for the highest ranked set of predicted input characters; and
determining a second location in the prediction bar for a next highest ranked set of predicted input characters, the second location corresponding to the position corresponding to the key of the subsequent candidate input character for the next highest ranked set of predicted input characters;
allocating the second location to the next highest ranked set of predicted input characters when the first location and the second location do not overlap.

5. The method of claim 4, further comprising:
determining another location in the prediction bar for a further next highest ranked set of predicted input characters, the other location corresponding to the position corresponding to the key of the subsequent candidate input character for the further next highest ranked set of predicted input characters when the first location character for the highest ranked set of predicted input characters and the second location for the next highest ranked set of predicted input characters overlap.

6. The method of any one of claims 1 to 5, wherein the prediction bar is displayed above or below the virtual keyboard.

7. The method of any one of claims 1 to 6, further comprising:
inputting a displayed set of predicted input characters in response to detecting a tap or swipe at or near the displayed set of predicted input characters.

8. The method of any one of claims 1 to 7, further comprising:
inputting a displayed set of predicted input characters in response to detecting a tap or swipe at or near the key corresponding to the subsequent candidate input character for the displayed set of predicted input characters.

9. The method of any one of claims 1 to 8, further comprising:
inputting a displayed set of generated predicted input characters in response to detecting a swipe in a portion of the virtual keyboard above or below the location of the displayed set of predicted input characters in the prediction bar.

10. The method of any one of claims 1 to 9, further comprising:
generating a plurality of sets of predicted input characters based on the input character.

11. The method of claim 1, wherein the prediction bar is displayed on an auxiliary display external to the one on which the virtual keyboard is displayed.

12. A handheld electronic device, comprising:
a processor (102); and
a display (112) coupled to the processor, configured to display a virtual keyboard (2020) having a plurality of keys arranged in accordance with a keyboard layout;
wherein the processor is configured to perform the method of any one of claims 1 to 11.

13. A computer readable medium having stored thereon computer program instructions for implementing a method for providing a virtual keyboard (2020) displayed on a display (112) of a handheld electronic device with visual cues, the virtual keyboard (2020) having a plurality of keys arranged in a conventional key configuration, the computer executable instructions comprising:
computer executable instructions for receiving an input of a character from the virtual keyboard; and
computer executable instructions for displaying a plurality of sets of predicted input characters in a prediction bar (2170) displayed on the display wherein each set of predicted input characters is located within the prediction bar at a different respective position corresponding to a position of a key of a subsequent candidate input character in the respective set of predicted input characters

14. The computer readable medium of claim 13, wherein each set of predicted input characters within the prediction bar is aligned vertically with the position of the key which corresponds to the subsequent candidate input character in the set of predicted input characters.

15. The computer readable medium of claim 13 or claim 14, further comprising:
computer executable instructions for inputting a displayed set of predicted input characters in response to detecting a tap or swipe at or near the displayed set of predicted input characters;
computer executable instructions for inputting a displayed set of predicted input characters in response to detecting a tap or swipe at or near the key corresponding to the subsequent candidate input character for the displayed set of predicted input characters; or
computer executable instructions for inputting a displayed set of generated predicted input characters in response to detecting a swipe in a portion of the virtual keyboard above or below the location of the displayed set of predicted input characters in the prediction bar.

## Patentansprüche

1. Verfahren zum Vorsehen einer virtuellen Tastatur (2020), die auf einer Anzeige (112) einer handgehaltenen elektronischen Vorrichtung mit visuellen Hinweisen angezeigt wird, wobei die virtuelle Tastatur eine Vielzahl von Tasten hat, die in einer herkömmlichen Tastenkonfiguration angeordnet sind, wobei das Verfahren aufweist:
Empfangen einer Eingabe eines Zeichens von der virtuellen Tastatur;
Anzeigen einer Vielzahl von Sätzen von vorhergesagten Eingabezeichen in einem Vorhersagebalken (2170), wobei sich jeder Satz von vorhergesagten Eingabezeichen in dem Vorhersagebalken an einer anderen jeweiligen Position entsprechend einer Position einer Taste eines nachfolgenden Kandidateingabezeichens in dem jeweiligen Satz von vorhergesagten Eingabezeichen befindet.

2. Das Verfahren gemäß Anspruch 1, das weiter aufweist:
Hervorheben einer oder mehrerer Taste(n) in der virtuellen Tastatur entsprechend dem nachfolgenden Kandidateingabezeichen in jedem der Vielzahl von Sätzen von vorhergesagten Eingabezeichen.

3. Das Verfahren gemäß Anspruch 1 oder Anspruch 2, wobei jeder der Vielzahl von Sätzen von vorhergesagten Eingabezeichen in dem Vorhersagebalken vertikal mit der Position einer Taste eines nachfolgenden Kandidateingabezeichens ausgerichtet ist.

4. Das Verfahren gemäß einem der Ansprüche 1 bis 3, das weiter aufweist:
Zuordnen einer ersten Position in dem Vorhersagebalken für einen am höchsten eingestuften Satz von vorhergesagten Eingabezeichen, wobei die erste Position der Position entsprechend der Taste des nachfolgenden Kandidateingabezeichens für den am höchsten eingestuften Satz von vorhergesagten Eingabezeichen entspricht; und
Bestimmen einer zweiten Position in dem Vorhersagebalken für einen am nächsthöchsten eingestuften Satz von vorhergesagten. Eingabezeichen,
wobei die zweite Position der Position entsprechend der Taste des nachfolgenden Kandidateingabezeichens für den am nächsthöchsten eingestuften Satz von vorhergesagten Eingabezeichen entspricht;
Zuordnen der zweiten Position zu dem nächsthöchsten eingestuften Satz von vorhergesagten Eingabezeichen, wenn sich die erste Position und die zweite Position nicht überlappen.

5. Das Verfahren gemäß Anspruch 4, das weiter aufweist:
Bestimmen einer weiteren Position in dem Vorhersagebalken für einen weiteren nächsthöchsten eingestuften Satz von vorhergesagten Eingabezeichen, wobei die andere Position der Position entsprechend der Taste des nachfolgenden Kandidateingabezeichens für den welteren nächsthöchsten eingestuften Satz von vorhergesagten Eingabezeichen entspricht, wenn das erste Positionszeichen für den am höchsten eingestuften Satz von vorhergesagten Eingabezeichen und die zweite Position für den nächsthöchsten eingestuften Satz von vorhergesagten Eingabezeichen überlappen.

6. Das Verfahren gemäß einem der Ansprüche 1 bis 5, wobei der Vorhersagebalken oberhalb oder unterhalb der virtuellen Tastatur angezeigt wird.

7. Das Verfahren gemäß einem der Ansprüche 1 bis 6, das weiter aufweist:
Eingeben eines angezeigten Satzes von vorhergesagten Eingabezeichen in Reaktion auf ein Erfassen eines Antippens oder Wischens auf dem oder in der Nähe des angezeigten Satzes von vorhergesagten Eingabezeichen.

8. Das Verfahren gemäß einem der Ansprüche 1 bis 7, das weiter aufweist:
Eingeben eines angezeigten Satzes von vorhergesagten Eingabezeichen in Reaktion auf ein Erfassen eines Antippens oder Wischens auf dem oder in der Nähe der Taste, die dem nachfolgenden Kandidateingabezelchen für den angezeigten Satz von vorhergesagten Eingabezeichen entspricht.

9. Das Verfahren gemäß einem der Ansprüche 1 bis 8, das weiter aufweist:
Eingeben eines angezeigten Satzes von erzeugten vorhergesagten Eingabezeichen in Reaktion auf ein Erfassen eines Wischens in einem Teil der virtuellen Tastatur oberhalb oder unterhalb der Position des angezeigten Satzes von vorhergesagten Eingabezeichen in dem Vorhersagebalken.

10. Das Verfahren gemäß einem der Ansprüche 1 bis 9, das weiter aufweist:
Erzeugen einer Vielzahl von Sätzen von vorhergesagten Eingabezeichen basierend auf dem Eingabezeichen.

11. Das Verfahren gemäß Anspruch 1, wobei der Vorhersagebalken auf einer Hilfsanzeige extern zu derjenigen angezeigt wird, auf der die virtuelle Tastatur angezeigt wird.

12. Eine handgehaftene elektronische Vorrichtung, die aufweist:
einen Prozessor (102); und
eine Anzeige (112), die mit dem Prozessor gekoppelt ist, die konfiguriert ist zum Anzeigen einer virtuellen Tastatur (2020) mit einer Vielzahl von Tasten, die in Übereinstimmung mit einem Tastatur-Layout angeordnet sind;
wobei der Prozessor konfiguriert ist zum Durchführen des Verfahrens gemaß einem der Ansprüche 1 bis 11.

13. Ein computerlesbares Medium mit darauf gespeicherten Computerprogrammanweisungen zum Implementieren eines Verfahrens zum Vorsehen einer virtuellen Tastatur (2020), die auf einer Anzeige (112) einer handgehaltenen elektronischen Vorrichtung mit visuellen Hinweisen angezeigt wird, wobei die virtuelle Tastatur (2020) eine Vielzahl von Tasten hat, die in einer herkömmlichen Tastenkonfiguration angeordnet sind, wobei die computerausführbaren Anweisungen aufweisen:
computerausführbare Anweisungen zum Empfangen einer Eingabe eines Zeichens von der virtuellen Tastatur; und
computerausführbare Anweisungen zum Anzeigen einer Vielzahl von Sätzen von vorhergesagten Eingabezeichen in einem Vorhersagebalken (2170), der auf der Anzeige angezeigt wird, wobei sich jeder Satz von vorhergesagten Eingabezeichen in dem Vorhersagehalken an einer anderen jeweiligen Position entsprechend einer Position einer Taste eines nachfolgenden Kandidateingabezeichens in dem jeweiligen Satz von vorhergesagten Eingabezeichen befindet.

14. Das computerlesbare Medium gemäß Anspruch 13, wobei jeder Satz von vorhergesagten Eingabezeichen in dem Vorhersagebalken vertikal mit der Position der Taste ausgerichtet ist, die dem nachfolgenden Kandidateingabezeichen in dem Satz von vorhergesagten Eingabezeichen entspricht.

15. Das computerlesbare Medium gemäß Anspruch 13 oder Anspruch 14, das weiter aufweist:
computerausführbare Anweisungen zum Eingeben eines angezeigten Satzes von vorhergesagten Eingabezeichen in Reaktion auf ein Erfassen eines Antippens oder Wischens auf dem oder in der Nähe des angezeigten Satzes von vorhergesagten Eingabezeichen;
computerausführbare Anweisungen zum Eingeben eines angezeigten Satzes von vorhergesagten Eingabezeichen in Reaktion auf ein Erfassen eines Antippens oder Wischens auf dem oder in der Nähe der Taste, die dem
- nachfolgenden Kandidateingabezeichen für den angezeigten Satz von vorhergesagten Eingabezeichen entspricht; oder
computerausführbare Anweisungen zum Eingeben eines angezeigten Satzes von erzeugten vorhergesagten Eingabezeichen in Reaktion auf ein Erfassen eines Wischens in einem Teil der virtuellen Tastatur oberhalb oder
unterhalb der Position des angezeigten Satzes von vorhergesagten Eingabezeichen in dem Vorhersagebalken.

## Revendications

1. Procédé pour fournir un clavier virtuel (2020) affiché sur un afficheur (112) d'un dispositif électronique de poche avec des repères visuels, le clavier virtuel ayant une pluralité de touches agencées dans une configuration de touche classique, le procédé comprenant :
la réception d'une entrée d'un caractère à partir du clavier virtuel ;
l'affichage d'une pluralité de jeux de caractères d'entrée prédits dans une barre de prédiction (2170), où chaque jeu de caractères d'entrée prédits est situé à l'intérieur de la barre de prédiction au niveau d'une position respective différente correspondant à une position d'une touche d'un caractère d'entrée candidat subséquent dans le jeu de caractères d'entrée prédits respectif.

2. Procédé selon la revendication 1, comprenant en outre :
la mise en évidence d'une ou plusieurs touches dans le clavier virtuel correspondant au caractère d'entrée candidat subséquent dans ledit chacun de la pluralité de jeux de caractères d'entrée prédits.

3. Procédé selon la revendication 1 ou la revendication 2, dans lequel chacun de la pluralité de jeux de caractères d'entrée prédits à l'intérieur de la barre de prédiction est aligné verticalement avec la position d'une touche d'un caractère d'entrée candidat subséquent.

4. Procédé selon l'une quelconque des revendications 1 à 3, comprenant en outre :
l'allocation d'un premier emplacement dans la barre de prédiction pour un jeu de caractères d'entrée prédits le mieux classé, le premier emplacement correspondant à la position correspondant à la touche du caractère d'entrée candidat subséquent pour le jeu de caractères d'entrée prédits le mieux classé ; et
la détermination d'un second emplacement dans la barre de prédiction pour un jeu de caractères d'entrée prédits le mieux classé suivant, le second emplacement correspondant à la position correspondant à la touche du caractère d'entrée candidat subséquent pour le jeu de caractères d'entrée prédits le mieux classé suivant ;
l'allocation du second emplacement au jeu de caractères d'entrée prédits le mieux classé suivant lorsque le premier emplacement et le second emplacement ne se chevauchent pas.

5. Procédé selon la revendication 4, comprenant en outre :
la détermination d'un autre emplacement dans la barre de prédiction pour un jeu de caractères d'entrée prédits le mieux classé suivant supplémentaire, l'autre emplacement correspondant à la position correspondant à la touche du caractère d'entrée candidat subséquent pour le jeu de caractères d'entrée prédits le mieux classé suivant supplémentaire lorsque le premier emplacement pour le jeu de caractères d'entrée prédits le mieux classé et le second emplacement pour le jeu de caractères d'entrée prédits le mieux classé suivant se chevauchent.

6. Procédé selon l'une quelconque des revendications 1 à 5, dans lequel la barre de prédiction est affichée au-dessus ou au-dessous du clavier virtuel.

7. Procédé selon l'une quelconque des revendications 1 à 6, comprenant en outre :
l'entrée d'un jeu de caractères d'entrée prédits affiché en réponse à la détection d'un tapotement ou d'un glissement au niveau ou à proximité du jeu de caractères d'entrée prédits affiché.

8. Procédé selon l'une quelconque des revendications 1 à 7, comprenant en outre :
l'entrée d'un jeu de caractères d'entrée prédits affiché en réponse à la détection d'un tapotement ou d'un glissement au niveau ou à proximité de la touche correspondant au caractère d'entrée candidat subséquent pour le jeu de caractères d'entrée prédits affiché.

9. Procédé selon l'une quelconque des revendications 1 à 8, comprenant en outre :
l'entrée d'un jeu de caractères d'entrée prédits générés affiché en réponse à la détection d'un glissement dans une partie du clavier virtuel au-dessus ou au-dessous de l'emplacement du jeu de caractères d'entrée, prédits affiché dans la barre de prédiction.

10. Procédé selon l'une quelconque des revendications 1 à 9, comprenant en outre :
la génération d'une pluralité de jeux de caractères d'entrée prédits sur la base du caractère d'entrée.

11. Procédé selon la revendication 1, dans lequel la barre de prédiction est affichée sur un afficheur auxiliaire externe à celui sur lequel le clavier virtuel est affiché.

12. Dispositif électronique de poche, comprenant :
un processeur (102) ; et
un afficheur (112) couplé au processeur, configuré pour afficher un clavier virtuel (2020) ayant une pluralité de touches agencée conformément à une disposition de clavier ;
dans lequel le processeur est configuré pour effectuer le procédé selon l'une quelconque des revendications 1 à 11.

13. Support lisible par ordinateur sur lequel sont stockées des instructions de programme informatique pour mettre en oeuvre un procédé pour fournir un clavier virtuel (2020) affiché sur un afficheur (112) d'un dispositif électronique de poche avec des repères visuels, le clavier virtuel (2020) ayant une pluralité de touches agencées dans une configuration de touche classique, les instructions exécutables par ordinateur comprenant ;
des instructions exécutables par ordinateur pour recevoir une entrée d'un caractère à partir du clavier virtuel ; et
des instructions exécutables par ordinateur pour afficher une pluralité de jeux de caractères d'entrée prédits dans une barre de prédiction (2170) affichée sur l'afficheur, où chaque jeu de caractères d'entrée prédits est situé à l'intérieur de la barre de prédiction au niveau d'une position respective différente correspondant à une position d'une touche d'un caractère d'entrée candidat subséquent dans le jeu de caractères d'entrée prédits respectif.

14. Support lisible par ordinateur selon la revendication 13, dans lequel chaque jeu de caractères d'entrée prédits à l'intérieur de la barre de prédiction est aligné verticalement avec la position de la touche qui correspond au caractère d'entrée candidat subséquent dans le jeu de caractères d'entrée prédits.

15. Support lisible par ordinateur selon la revendication 13 ou la revendication 14, comprenant en outre :
des instructions exécutables par ordinateur pour entrer un jeu de caractères d'entrée prédits affiché en réponse à la détection d'un tapotement ou d'un glissement au niveau ou à proximité du jeu de caractères d'entrée prédits affiché ;
des instructions exécutables par ordinateur pour entrer un jeu de caractères d'entrée prédits affiché en réponse à la détection d'un tapotement ou d'un glissement au niveau ou à proximité de la touche correspondant au caractère d'entrée candidat subséquent pour le jeu de caractères d'entrée prédits affiché ; ou
des instructions exécutables par ordinateur pour entrer un jeu de caractères d'entrée prédits générés affiché en réponse à la détection d'un glissement dans une partie du clavier virtuel au-dessus ou au-dessous de l'emplacement du jeu de caractères d'entrée prédits affiché dans la barre de prédiction.
